(19) Europäisches Patentamt
European Patent Office
Office européen des brevets

(11) **EP 2 786 477 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **12794660.6**

(22) Anmeldetag: **12.11.2012**

(51) Int Cl.:
*H02M 3/338* [(2006.01)]    *H02M 3/335* [(2006.01)]
*H02M 7/49* [(2007.01)]    *B60L 9/28* [(2006.01)]
*H02M 1/00* [(2007.01)]

(86) Internationale Anmeldenummer:
**PCT/EP2012/072340**

(87) Internationale Veröffentlichungsnummer:
**WO 2013/079300 (06.06.2013 Gazette 2013/23)**

(54) **TAKTVERFAHREN EINES SERIENRESONANZ-DC/DC-STROMRICHTERS EINES MEHRPUNKT-MITTELFREQUENZ-EINSPEISESTROMRICHTERS EINES TRAKTIONSSTROMRICHTERS**

MODULATION METHOD OF A SERIES RESONANT DC/DC CONVERTER OF A MULTI-LEVEL MEDIUM-FREQUENCY INFEED OF A TRACTION CONVERTER

PROCÉDÉ DE MODULATION D'UN CONVERTISSEUR CONTINU-CONTINU À RÉSONANCE SÉRIE D'UNE ALIMENTATION MULTI-NIVEAUX MOYENNE FRÉQUENCE D'UN CONVERTISSEUR DE TRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2011 DE 102011087283**

(43) Veröffentlichungstag der Anmeldung:
**08.10.2014 Patentblatt 2014/41**

(73) Patentinhaber: **Siemens Aktiengesellschaft 80333 München (DE)**

(72) Erfinder: **WEIGEL, Jan 91077 Großenbuch (DE)**

(56) Entgegenhaltungen:
**EP-A2- 1 226 994    US-A- 4 953 068**

- MICHAEL STEINER ET AL: "Medium frequency topology in railway applications", 2007 EUROPEAN CONFERENCE ON POWER ELECTRONICS AND APPLICATIONS, 1. Januar 2007 (2007-01-01), Seiten 1-10, XP055048811, DOI: 10.1109/EPE.2007.4417570 in der Anmeldung erwähnt
- JAN WEIGEL ET AL: "High voltage IGBTs in medium frequency traction power supply", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541606, ISBN: 978-1-4244-4432-8
- ORTIZ G ET AL: "1 Megawatt, 20 kHz, isolated, bidirectional 12kV to 1.2kV DC-DC converter for renewable energy applications", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 3212-3219, XP031727509, ISBN: 978-1-4244-5394-8
- HOLGER HOFFMANN ET AL: "High voltage IGBTs and medium frequency transformer in DC-DC converters for railway applications", POWER ELECTRONICS ELECTRICAL DRIVES AUTOMATION AND MOTION (SPEEDAM), 2010 INTERNATIONAL SYMPOSIUM ON, IEEE, PISCATAWAY, NJ, USA, 14 June 2010 (2010-06-14), pages 744-749, XP031727597, ISBN: 978-1-4244-4986-6

**Beschreibung**

Die Erfindung bezieht sich auf ein Verfahren zum Takten von abschaltbaren Leistungshalbleiterschaltern eines netz- und lastseitigen selbstgeführten Stromrichters eines Serienresonanz-DC/DC-Stromrichters eines Mehrpunkt-Mittelfrequenz-Einspeisestromrichters eines Traktionsantriebs, wobei die beiden selbstgeführten Stromrichter wechselspannungsseitig mittels eines Mittelfrequenz-Transformators miteinander verknüpft sind, wobei in Reihe zur Streuinduktivität des Mittelfrequenz-Transformators ein Resonanzkondensator geschaltet ist, und wobei jedem dieser beiden selbstgeführten Stromrichter gleichspannungsseitig ein Zwischenkreiskondensator elektrisch parallel geschaltet ist, und die Erfindung bezieht sich weiterhin auf eine Vorrichtung, mit der dieses Verfahren umgesetzt werden kann.

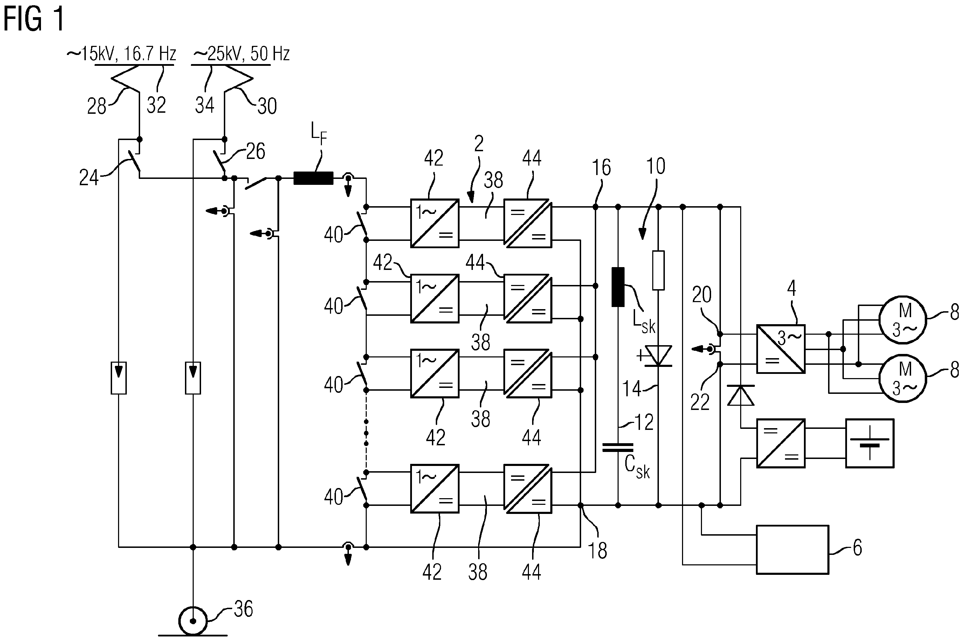

Ein Mehrpunkt-Mittelfrequenz-Einspeisestromrichter eines Traktionsstromrichters ist aus der in FIG 1 näher dargestellten Ausführungsform ersichtlich, die aus der Veröffentlichung mit dem Titel "Medium Frequency Topology in Railway Applications" von Dr. Michael Steiner und Dr. Harry Reinold, abgedruckt im Konferenzband der European Conference on Power Electronics and Applications, Alborg, 2007, bekannt ist.

Aus dem Dokument "High Voltage IGBTs in Medium Frequency Traction Power Supply" (Jan Weigel, Andreas Nagel, Holger Hoffmann, 13th European Conference on Power Electronics and applications, 2009: EPE'09, 8.-10. September 2009, Barcelona, Spain) ist ein Stromrichtersystem mit DC/DC_Stromrichtern bekannt, welches einen konventionellen Traktionstransformator ersetzen kann.

Aus dem Dokument "1 Megawatt, 20 kHz, Isolated, Bidirectional 12kV to 1.2kV DC-DC Converter for Renewable Energy Applications" (G. Oritz, J. Biela, D. Bortis, J. W. Kolar; 2010 International Power Electronics Conference: IPEC-SAPPORO 2010; Sapporo, Japan, IEEE, 21. Juni 2010) ist ein System mit einem bidirektionalen Stromrichter und einem Mittelspannungstransformator bekannt.

Aus der EP 1 226 994 A2 ist eine Mittelfrequenzenergieversorgung für Schienenfahrzeuge bekannt. Diese Schrift offenbart eine elektronische Schaltung zur bidirektionale Umwandlung einer hohen Eingangsspannung in eine DC Ausgangsspannung für die Anwendung in Schienenfahrzeugen.

US4953068A offenbart ein Taktverfahren für eine resonante Dual-Active-Bridge bei dem ein Zwischenzustand eingefügt wird in welchem beide Seiten des Transformators kurzgeschlossen werden.

Gemäß der Darstellung dieser FIG 1 weist ein Traktionsstromrichter eines Traktionsantriebs einen Mehrpunkt-Mittelfrequenz-Einspeisestromrichter 2, einen lastseitigen selbstgeführten Pulsstromrichter 4 und einen Hilfsbetriebe-Stromrichter 6 auf. Am lastseitigen selbstgeführten Stromrichter 4 sind zwei Drehstrommotoren 8 angeschlossen. Im Spannungszwischenkreis 10 dieses Traktionsstromrichters sind ein Saugkreis 12 und ein Kurzschließer 14 angeordnet. Mittels dieses Zwischenkreises 10 sind die beiden gleichspannungsseitigen Ausgänge 16 und 18 des netzseitigen Einspeisestromrichters 2 und die gleichspannungsseitigen Eingänge 20 und 22 des lastseitigen selbstgeführten Stromrichters 4 elektrisch leitend miteinander verbunden. Der netzseitige Einspeisestromrichter 2 mittels einer Eingangsdrossel $L_F$, eines Schützes 24 bzw. 26 und eines Stromabnehmers 28 bzw. 30 mit einem Fahrdraht 32 bzw. 34 verbindbar. Der Fahrdraht 32 weist eine Netzwechselspannung von 15kV, 16,7Hz auf, wogegen der Fahrdraht 34 eine Netzwechselspannung von 25kV, 50Hz aufweist. Diese Spannungen stehen zwischen Fahrdraht 32 bzw. 34 und einem Rad 36 eines schienengebundenen Fahrzeugs an. Diese Netzwechselspannung fällt somit an einer Vielzahl elektrisch in Reihe geschalteter Stromrichtergruppen 38 ab.

Jede Stromrichtergruppe 38 weist eingangsseitig einen Schalter 40 auf, mit dem eine fehlerhafte Stromrichtergruppe 38 kurzgeschlossen werden kann, damit der Traktionsstromrichter redundant weiterbetrieben werden kann. Jede Stromrichtergruppe 38 weist netzseitig einen Vierquadrantensteller 42 und gleichspannungsseitig einen Serienresonanz-DC/DC-Stromrichter 44 auf. Diese beiden Stromrichterschaltungen 42 und 44 sind gleichspannungsseitig miteinander elektrisch leitend verbunden. Die genauen Schaltungsausführungen dieser beiden Stromrichterschaltungen 42 und 44 einer jeden Stromrichtergruppe 38 des Einspeisestromrichters 2 sind der eingangs genannten Veröffentlichung entnehmbar. Ausgangsseitig sind diese Serienresonanz-DC/DC-Stromrichter 44 elektrisch parallel geschaltet. Bei dieser Ausführungsform der Einspeisevorrichtung 2 eines Traktionsstromrichters weist eine Mittelfrequenz-Transformator-Einrichtung eine Vielzahl von einphasigen Transformatoren auf, die nicht untereinander magnetisch gekoppelt sind. Dadurch bildet jede Stromrichtergruppe 38 eine selbstständige Baueinheit. Somit kann abhängig von der Netzspannung eine beliebige Anzahl von Stromrichtergruppen 38 kaskadiert werden.

Mittels dieses netzseitigen Einspeisestromrichters 2 eines Traktionsstromrichters wird der ansonsten verwendete Traktionstransformator ersetzt, der insbesondere bei einer Netzfrequenz von 16,7Hz groß und schwer ist. Durch diesen Einspeisestromrichter 2 können 50% des Gewichts und 30% des Bauvolumens eines Traktionstransformators eingespart werden. Da kein Traktionstransformator mehr benötigt wird, wird dieser Einspeisestromrichter 2 eines Traktionsstromrichters als netztrafolose Einspeiseschaltung bezeichnet.

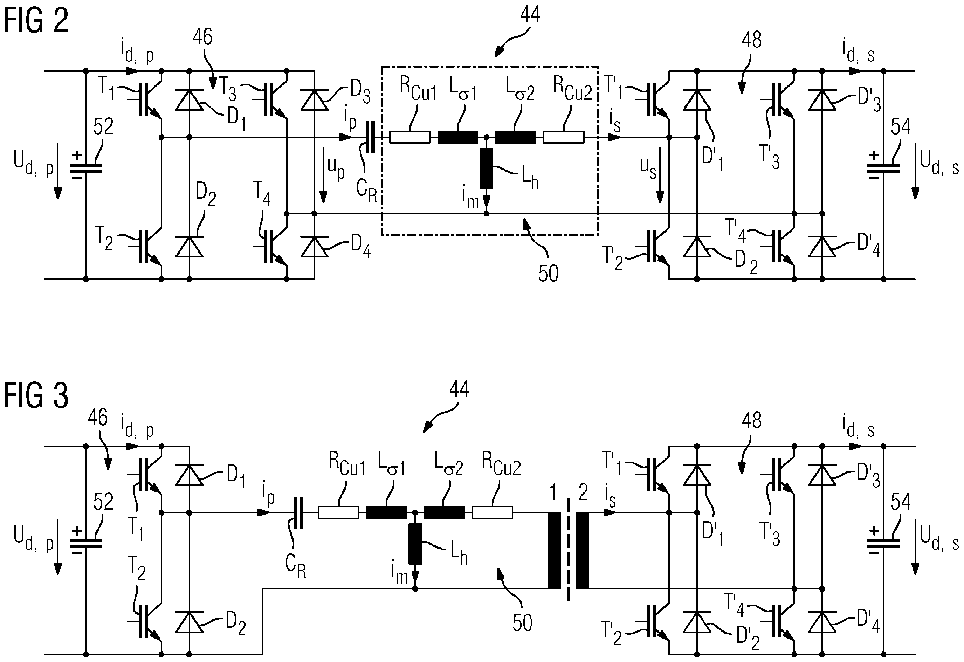

In FIG 2 ist der Serienresonanz-DC/DC-Stromrichter 44, der aus der eingangs genannten Veröffentlichung bekannt ist, genauer dargestellt. Dieser Serienresonanz-DC/DC-Stromrichter 44 weist zwei selbstgeführte Stromrichter 46 und 48 auf, die wechselspannungsseitig mittels eines einphasigen Mittelfrequenz-Transformators 50 miteinander verknüpft sind. Da diese beiden selbstgeführten Stromrichter 46 und 48 jeweils mit einer Wicklung des Mittelfrequenz-Transformators 50 elektrisch leitend verbunden sind, wird der netzseitige selbstgeführte Stromrichter 46 auch als primärseitiger selbstgeführter Stromrichter 46 und der lastseitige selbstgeführte Stromrichter 48 auch als sekundärseitiger selbstgeführter Stromrichter 48 bezeichnet. Jeder Stromrichter 46 und 48 dieses Serienresonanz-DC/DC-Stromrichters 44 ist als einphasige Vollbrückenschaltung ausgeführt und gleichspannungsseitig ist jedem Stromrichter 46 und 48 ein Gleichspannungs-Kondensator 52 und 54 elektrisch parallel geschaltet. Wechselspannungsseitig sind diese beiden selbstgeführten Stromrichter 46 und 48 mittels des einphasigen Mittelfrequenz-Transformators 50 elektrisch miteinander verbunden. Dieser einphasige Mittelfrequenz-Transformator 50 ist als einphasiges T-Ersatzschaltbild in dieser FIG 2 dargestellt. Zusätzlich in Reihe zur Streuinduktivität $L_\sigma$, bestehend aus den primär- und sekundärseitigen Streuinduktivitäten $L_{\sigma1}$, $L_{\sigma2}$, des Transformators 50 ist ein Resonanzkondensator $C_R$ geschaltet, womit sich ein Reihenschwingkreis bestehend aus diesem Resonanzkondensator $C_R$ und der Transformator-Streuinduktivität $L_\sigma$ ergibt. Dieser Serienschwingkreis wird durch entsprechende Taktung der abschaltbaren Leistungshalbleiterschalter $T_1$, $T_2$, $T_3$, $T_4$ des primären selbstgeführten Stromrichters 46 und der abschaltbaren Leistungshalbleiterschalter $T_1^{'}$, $T_2^{'}$, $T_3^{'}$, $T_4^{'}$ des sekundärseitigen selbstgeführten Stromrichters 48 des Serienresonanz-DC/DC-Stromrichters 44 mit Resonanzfrequenz angeregt, wodurch sich ein quasi sinusförmiger Strom einstellt. Dieser sinusförmige Strom erlaubt das Schalten dieser abschaltbaren Leistungshalbleiterschalter $T_1$, $T_2$, $T_3$, $T_4$ und $T_1^{'}$, $T_2^{'}$, $T_3^{'}$, $T_4^{'}$ im StromNulldurchgang (ZCS), wodurch sich die Halbleiterverluste auf sehr kleine Werte reduzieren lassen. Da die abschaltbaren Leistungshalbleiterschalter $T$, ..., $T_4$ und $T_1^{'}$, ..., $T_4^{'}$ der einphasigen Vollbrückenschaltungen 46 und 48 dieses Serienresonanz-DC/DC-Stromrichters 44 mit gleicher Frequenz und Phasenlage getaktet werden, stehen die Zwischenkreisspannungen $U_{d,p}$ und $U_{d,s}$ an den Gleichspannungs-Kondensatoren 52 und 54 synchron alternierend mit positiven und negativen Vorzeichen an den Anschlüssen des Resonanzkreises an. Dadurch ergibt sich über den Mittelfrequenz-Transformator 50 eine Spannung $\Delta u(t)$, deren Amplitude der Differenz der beiden Zwischenkreisspannungen $U_{d,p}$ und $U_{d,s}$ entspricht. Solange die Zwischenkreisspannungen $U_{d,p}$ und $U_{d,s}$ amplitudenmäßig gleich groß sind, hat die Spannung $\Delta u(t)$ eine Amplitude Null und es fließt kein Strom. Sobald aber eine Zwischenkreis-Spannungs-differenz $\Delta Ud$ auftritt, wird die Spannung $\Delta U(t)$ verschieden von Null und der Resonanzkreis wird angeregt. Damit beginnt ein Resonanzstrom zu fließen. Dieser stellt sich so ein, dass er die Seite mit der höheren Zwischenkreisspannung $U_{d,p}$ bzw. $U_{d,s}$ entnimmt und der anderen Seite zuführt. Somit stellt sich in Abhängigkeit von den Zwischenkreisspannungen $U_{d,p}$ und $U_{d,s}$ der Leistungsfluss automatisch ein.

Neben der Vollbrückenschaltung besteht auch die Möglichkeit, den selbstgeführten netzseitigen Stromrichter 46 des Serienresonanz-DC/DC-Stromrichters 44 als einphasige Halbbrückenschaltung auszuführen. Diese Halbbrückenschaltung kann in verschiedenen Topologien ausgeführt sein. Diese unterscheiden sich vorrangig in der Anzahl und der Strombelastung der Kondensatoren, sind aber funktionell gleichwertig. Eine erste Topologie der einphasigen Halbbrückenschaltung ist der Veröffentlichung "15kV/16,7Hz Energy Supply System with Medium Frequency Transformer and 6.5kV IGBTs in Resonant Operation" von B.Engel, M. Viktor, G. Bachmann und A. Falk, veröffentlicht im Konferenzband der EPE-Konferenz 2003 in Toulouse zu entnehmen.

Eine zweite Topologie der Halbbrückenschaltung ist in FIG 3 näher dargestellt. Der große Unterschied zur Ausführungsform des Serienresonanz-DC/DC-Stromrichters 44 gemäß FIG 2 besteht darin, dass sich die Amplitude der erzeugten Wechselspannung halbiert, d.h. sie entspricht näherungsweise der halben primärseitigen Zwischenkreisspannung $U_{d,p}$. Dadurch verdoppelt sich die Amplitude des Resonanzstroms, wenn man davon ausgeht, dass die Halbbrücke die gleiche Leistung wie die Vollbrücke überträgt. Der Vorteil dieser einphasigen Halbbrückenschaltung gegenüber einer einphasigen Vollbrückenschaltung des primärseitigen selbstgeführten Stromrichters 46 besteht darin, dass sich die Anzahl der abschaltbaren Leistungshalbleiterschalter halbiert, wodurch sich der Aufwand für die Ansteuerung verringert. Jedoch müssen diese abschaltbaren Leistungshalbleiterschalter für einen größeren Strom dimensioniert werden.

Der Serienresonanz-DC/DC-Stromrichter 44 kann wahlweise beidseitig mit einer Halbbrücke oder mit einer Kombination aus Halb- und Vollbrücke betrieben werden. Bei der Kombination der Halb- und Vollbrücke muss die Spannungsübersetzung ü des Transformators so angepasst werden, dass der Unterschied zwischen primär und sekundär Wechselspannung ausgeglichen wird.

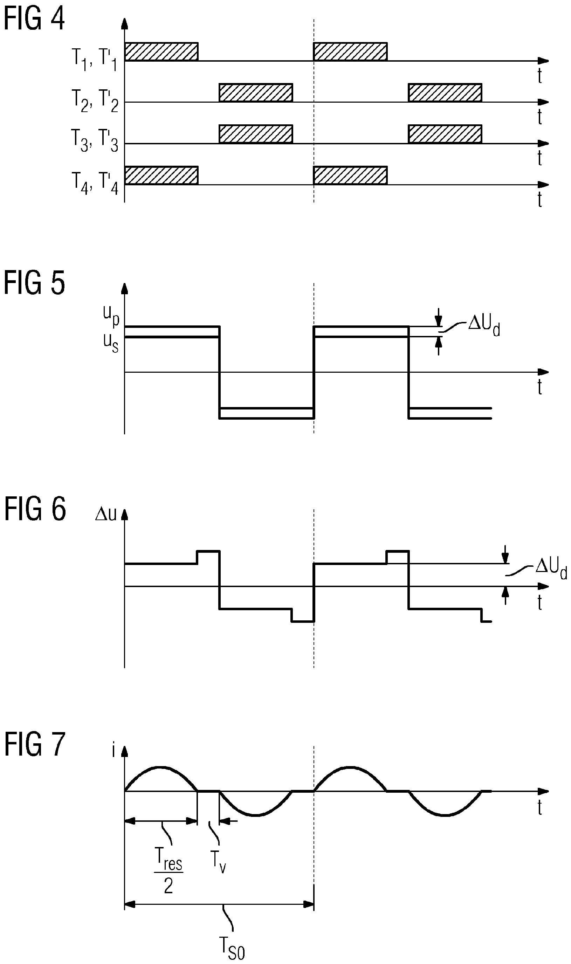

Anhand der Ausführungsform des Serienresonanz-DC/DC-Stromrichters 44 gemäß FIG 2 soll ein bekanntes Taktverfahren vorgestellt werden. Dabei soll sich ein Leistungsfluss von der Primär- zur Sekundärseite einstellen. In FIG 4 sind die Taktsignale der abschaltbaren Leistungshalbleiterschalter $T_1$, $T_1^{'}$, $T2$, $T_2^{'}$, $T3$, $T_3^{'}$ und $T4$, $T_4^{'}$ der beiden selbstgeführten Stromrichter 46 und 48 jeweils über der Zeit t dargestellt. In den FIG 5, 6 und 7 sind jeweils die zeitlichen Verläufe der primär-und sekundärseitigen Zwischenkreis-Spannungen $U_{d,p}$ und $U_{d,s}$ der zeitliche Verlauf der Spannung Δu über den Schwingkreis und der zeitliche Verlauf des Resonanzstroms i dargestellt. Da die abschaltbaren Leistungshalbleiterschalter $T_1, ..., T_4$ und $T'_1, ..., T'_4$ der beiden selbstgeführten Stromrichter 46 und 48 synchron zueinander mit derselben Taktfrequenz und Phasenlage getaktet werden, werden in der FIG 4 nur vier Diagramme benötigt. Dadurch wird dem Schwingkreis eine rechteckförmige Spannung Δu aufgeprägt. Der Ablauf einer Taktperiode für $U_{d,p} > U_{d,s}$ verläuft wie folgt:

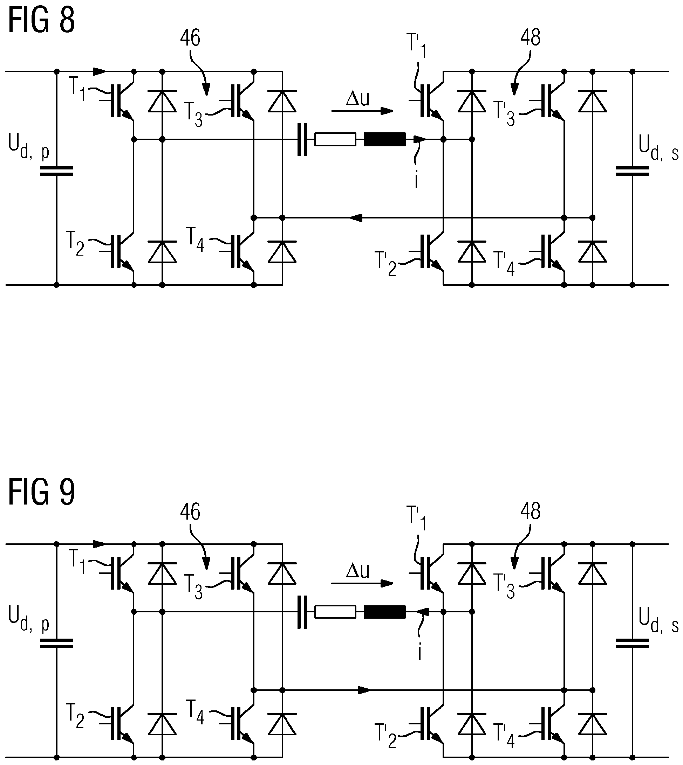

Die abschaltbaren Leistungshalbleiterschalter $T_1, T'_1$ und $T_4, T'_4$ der beiden selbstgeführten Stromrichter 46 und 48 werden eingeschaltet (Leitzustand), wodurch die primär- und sekundärseitigen Zwischenkreis-Spannungen $U_{d,p}$ und $U_{d,s}$ positiv am Mittelfrequenz-Transformator 50 mit Resonanzkondensator $C_R$ anliegen (FIG 5). Damit wird die Spannung Δu über den Schwingkreis positiv (FIG 6) und es stellt sich ein sinusförmiger Resonanzstrom i(t) mit der Periodendauer $T_{res}$ ein (FIG 7), welcher der Sprungantwort des Resonanzkreises entspricht. Dieser Verfahrensschritt dauert bis zum nächsten Nulldurchgang des Resonanzstroms i(t) an und ist $T_{res}/2$ zeitlich lang. Diese Dauer wird auch als Leitdauer $T_1$ bezeichnet. In FIG 8 ist der Stromflusspfad des ersten Verfahrensschrittes dieses bekannten Ansteuerverfahrens in der Anordnung des Serienresonanz-DC/DC-Stromrichters 44 in der Ausführungsform der FIG 2 mit vernachlässigter Hauptinduktivität und Potentialtrennung dargestellt.

Am Ende dieser Leitdauer $T_1$ (Nulldurchgang des Resonanzstroms i(t) werden die abschaltbaren Leistungshalbleiterschalter $T_1, T'_1$ und $T_4, T'_4$ wieder ausgeschaltet (Sperrzustand). Das heißt, diese Leistungshalbleiterschalter $T_1, T'_1$ und $T_4, T'_4$ schalten stromlos (ZCS).

Am ersten Verfahrensschritt schließt sich eine so genannte Wechselrichtersperrzeit $T_v$ an, während der alle abschaltbaren Leistungshalbleiterschalter $T_1, T'_1, ..., T_4, T'_4$ gesperrt sind. Folglich kann zwischen Primär- und Sekundärseite weder ein Strom fließen noch eine Leistung übertragen werden. Die Spannung Δu über dem Schwingkreis nimmt während dieser Wechselrichtersperrzeit $T_v$ den Wert der Resonanzkondensatorspannung an.

Im Gegensatz zum ersten Verfahrensschritt werden nun im dritten Verfahrensschritt die abschaltbaren Leistungshalbleiterschalter $T_2, T'_2$ und $T_3, T'_3$ leitend geschaltet (FIG 4), wodurch die Zwischenkreisspannungen $U_{d,p}$ und $U_{d,s}$ primär- und sekundärseitig negativ am Mittelfrequenz-Transformator anliegen (FIG 5). Dadurch kehrt sich die Polarität der Spannung Δu über den Schwingkreis um (FIG 6), wodurch auch der Resonanzstrom i(t) negativ ist. Dieser Verfahrensschritt dauert wieder so lange an, bis der Resonanzstrom i(t) Null wird. Der Stromflusspfad dieses dritten Verfahrensschritts ist im Serienresonanz-DC/DC-Stromrichter 44 in der Ausführungsform gemäß FIG 2 in FIG 9 schematisch dargestellt.

Als vierter Verfahrensschritt folgt wieder eine Wechselrichtersperrzeit $T_v$. Diese wird eingeleitet, indem die leitenden abschaltbaren Leistungshalbleiterschalter $T_2 T'_2$ und $T_3 T'_3$ der primär- und sekundärseitigen selbstgeführten Stromrichter 46 und 48 des Serienresonanz-DC/DC-Stromrichters 44 wieder gesperrt werden (FIG 4). Da zu Beginn des vierten Verfahrensschritts der Resonanzstrom i(t) bereits Null ist, schalten diese abschaltbaren Leistungshalbleiterschalter $T_2, T'_2$ und $T_3, T'_3$ ebenfalls stromlos (ZCS).

Diese beiden Wechselrichtersperrzeiten $T_v$ verlängern die Periodendauer des Betriebes, wodurch sich die Schaltfrequenz verkleinert. Während der Wechselrichtersperrzeit $T_v$ können die Speicherladungsträger in den Halbleitern zum einen rekombinieren und zum anderen vom Magnetisierungsstrom nahezu verlustarm ausgeräumt werden.

Um die Anzahl von seriengeschalteten Stromrichtergruppen 38, bestehend jeweils aus einem Vierquadrantensteller 42 und einem Serienresonanz-DC/DC-Stromrichter 44 klein zu halten, werden in den Stromrichtergruppen 38 hochsperrende abschaltbare Leistungshalbleiterschalter verwendet. Je höher die Sperrspannung, desto größer ist aber die gespeicherte Ladung und desto größer die Freiwerdezeit. Damit eine Blockierspannung aufgebaut werden kann, muss die im Halbleiter gespeicherte Ladung ausgeräumt werden, wodurch sich eine Sperrschicht aufbaut. Dies geschieht durch Rekombination und durch Ausräumen mittels eines externen Stroms. Wird stromlos geschaltet (sinusförmiger Laststrom, im Nulldurchgang geschaltet), steht kein Strom zur Verfügung und die Freiwerdezeit nimmt unter Umständen einen sehr großen Wert gemessen an der Periodendauer an. Die Speicherladung und damit die Freiwerdezeit steigen mit dem Laststrom an.

Die Schaltverluste lassen sich durch einen geeignet gewählten Magnetisierungsstrom des Mittelfrequenz-Transformators 50 im Serienresonanz-DC/DC-Stromrichter 44 dahingehend optimieren, dass der Serienresonanz-DC/DC-Stromrichter 44 sehr gut ausgenutzt wird, indem der hart schaltende vergleichsweise kleine Magnetisierungsstrom im Vergleich zum Nennstrom die abschaltbaren Leistungshalbleiterschalter der primär- und sekundärseitigen selbstgeführten Stromrichter 46 und 48 des Serienresonanz-DC/DC-Stromrichter 44 ausräumt und so die Freiwerdezeit begrenzt.

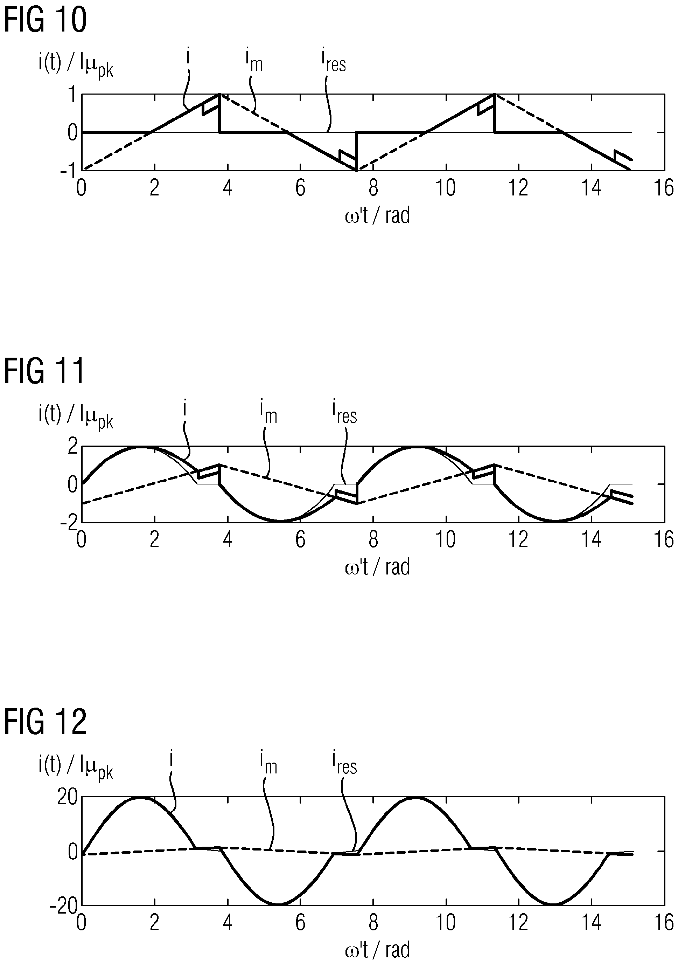

Im regulären Betrieb ist der Magnetisierungsstrom aufgrund der rechteckförmigen Spannung über der Hauptinduktivität $L_h$ des Mittelfrequenz-Transformators 50 nahezu dreieckförmig und schwingt um Null (FIG 10, 11). Wird der Mittelfrequenz-Transformator 50 in Sättigung getrieben, beispielsweise durch einen Taktfehler oder die Reduktion der Frequenz, wodurch sich die Periodendauer vergrößert, steigt der Magnetisierungsstrom stark an. Der Magnetisierungsstrom ist folglich ein Indikator dafür, ob der Mittelfrequenz-Transformator 50 sättigt. Die Grenze, bei welcher die Sättigung beginnt, kann ein bestimmter Magnetisierungsstrom $i_m$ zugeordnet werden. Überschreitet die Amplitude des Magnetisierungsstroms diesen Wert, liegt Sättigung vor. Der Mittelfrequenz-Transformator 50 eines jeden Serienresonanz-DC/DC-Stromrichters 44 wird darauf ausgelegt, dass im regulären Betrieb ein gewisser Abstand zwischen der Magnetisierungsstrom-Amplitude und dem Sättigungsgrenzwert besteht.

Wie bereits erwähnt, trägt der Magnetisierungsstrom $i_m$ entscheidend zur Reduktion der Schaltverluste bei. Während der Wechselrichtersperrzeit $T_v$ wird der Magnetisierungsstrom $i_m$ von der Hauptinduktivität $L_h$ weiter getrieben und räumt die Speicherladung aus den abgeschalteten abschaltbaren Leistungshalbleiterschaltern und Dioden aus. Die Spannung über dem betreffenden Halbleiterschalter steigt dadurch an. Sehr vereinfacht kann man sich die abgeschalteten Halbleiter als Kondensatoren mit geringer Kapazität vorstellen, die durch den Magnetisierungsstrom $i_m$ geladen werden, bis die Zwischenkreisspannung erreicht ist.

Je länger die Wechselrichtersperrzeit $T_v$ ist, desto mehr Speicherladungen können ausgeräumt werden, was gleichzeitig mit einem größeren Spannungsanstieg über dem Halbleiter einher geht. Im Idealfall steigt diese Spannung bis auf die Zwischenkreisspannung an, was gleichzeitig bedeutet, dass die Spannung über dem im anderen Zweig liegenden demnächst einzuschaltenden Halbleiter auf Null absinkt.

Reicht die Wechselrichtersperrzeit $T_v$ nicht aus, um alle Ladungsträger auszuräumen, tritt beim Einschalten des zweiten Halbleiters der gleichen Halbbrücke eine Stromspitze auf, die die verbleibenden Ladungen ausräumt (FIG 11). Diese Stromspitzen verursachen im eingeschalteten Halbleiter Einschaltverluste und gleichzeitig Ausschaltverluste im ausgeschalteten Halbleiter. Ist die Wechselrichtersperrzeit $T_v$ größer als die Zeit, die zum Ausräumen benötigt wird, kommutiert der Magnetisierungsstrom $i_m$ auf die Diode der Brücke mit der niedrigeren Zwischenkreisspannung. In den FIG 10 bis 12 sind die Ströme im Serienresonanz-DC/DC-Stromrichter 44, nämlich der sinusförmige resonante Stromanteil $i_{res}$, der Magnetisierungsstrom $i_m$ des Mittelfrequenz-Transformators 50 und der Stromrichterstrom $i$ (Gesamtstrom), bei unterschiedlichen Lastfällen jeweils über der Kreisfrequenz $\omega t$ dargestellt, wobei die FIG 10 einen Leerlauffall, die FIG 11 einen Teillastfall und die FIG 12 einen Nennlastfall veranschaulicht.

Ein bekannter Serienresonanz-DC/DC-Stromrichter 44 und dessen Taktverfahren werden hinsichtlich zu übertragender Leistung, Magnetisierungsstrom $i_m$ und Wechselrichtersperrzeit $T_v$ auf den Nennbetrieb abgestimmt (FIG 12). Im Teillast- oder Leerlaufbetrieb (FIG 11, FIG 10) ist dieser Magnetisierungsstrom $i_m$ zu groß und begrenzt durch die Schaltverluste den Wirkungsgrad des Serienresonanz-DC/DC-Stromrichters 44.

Der Erfindung liegt nun die Aufgabe zugrunde, das bekannte Verfahren derart zu verändern, das einen Teillastbetrieb bei hohem Wirkungsgrad gestattet.

Diese Aufgabe wird mit den kennzeichnenden Merkmalen des Anspruchs 1 in Verbindung mit den Verfahrensschritten a) bis d) dieses Anspruchs 1 erfindungsgemäß gelöst.

Dadurch, dass für eine Taktpause variabler Länge der Mittelfrequenz-Transformator primär- oder sekundärseitig kurzgeschlossen wird, steht am Transformator keine Spannung an, so dass sich der Hauptfluss im Transformator nicht verändert. Dadurch wird der Fluss im Mittelfrequenz-Transformator konstant gehalten. Das gestattet die Verringerung der Betriebsfrequenz, wodurch sich die Schaltverluste im speisenden selbstgeführten Stromrichter des Serienresonanz-DC/DC-Stromrichters reduzieren. Idealerweise wird der erste zusätzliche erfinderische Verfahrensschritt genau dann eingefügt, wenn der Laststrom durch Null geht. Dadurch entstehen nur wenige zusätzliche Durchlassverluste durch den Magnetisierungsstrom, wodurch sich der Wirkungsgrad des Serienresonanz-DC/DC-Stromrichters gegenüber dem festfrequenten Betrieb erhöht.

Ob die Primär- oder Sekundärseite des Mittelfrequenz-Transformators des Serienresonanz-DC/DC-Stromrichters erfindungsgemäß kurzgeschlossen wird, ist nicht relevant. Wichtig ist nur, dass der selbstgeführte Stromrichter der jeweils anderen Seite des Mittelfrequenz-Transformators gesperrt ist. Dadurch wird verhindert, dass es zwischen den primären und sekundären Zwischenkreisen zu einem ungewollten Stromfluss kommt.

Somit kann ein Traktionsstromrichter mit einem Mehrpunkt-Mittelfrequenz-Einspeisestromrichter, dessen Serienresonanz-DC/DC-Stromrichter erfindungsgemäß getaktet wird, auch bei Applikationen eingesetzt werden, die sich durch eine hohe Häufigkeit von Teillastbetriebsfällen auszeichnen.

Bei einem vorteilhaften Verfahren zum Takten von abschaltbaren Leistungshalbleiterschaltern von primär- und sekundärseitigen selbstgeführten Stromrichtern eines Serienresonanz-DC/DC-Stromrichters sind die beiden Taktpausen variabler Länge während einer Schaltperiodendauer gleich lang. Dadurch gleichen sich ungewollte Effekte aufgrund der symmetrischen Bedingungen gegenseitig aus. Gleichzeitig wird sichergestellt, dass die am Transformator anliegende Wechselspannung einen Mittelwert von Null hat. Dadurch wird sichergestellt, dass im Magnetisierungsstrom kein Gleichanteil auftritt.

Bei einem weiteren vorteilhaften Verfahren gemäß der Erfindung werden die abschaltbaren Leistungshalbleiterschalter des primär- oder sekundärseitigen selbstgeführten Stromrichters derart getaktet, dass der Transformator kurzgeschlossen und der Resonanzkondensator nicht im kurzgeschlossenen Stromkreis liegt.

Bei einem weiteren vorteilhaften Verfahren gemäß der Erfindung sind die beiden Taktpausen variabler Länge derart bemessen, dass der Mittelfrequenz-Transformator nicht in Sättigung gerät. Während der Mittelfrequenz-Transformator kurzgeschlossen ist, liegt immer noch die Summenspannung zweier Durchlassspannungen, nämlich einer Diode und eines abschaltbaren Leistungshalbleiterschalters, am Mittelfrequenz-Transformator an. Diese Spannung bewirkt ein geringes Absinken des Magnetisierungsstroms. Wird die Taktpause sehr lang, dann sinkt der Magnetisierungsstrom entsprechend stärker ab. Daraus ergibt sich unter Umständen eine Transformatorsättigung.

Um dieses erfindungsgemäße Verfahren zum Takten von abschaltbaren Leistungshalbleiterschaltern eines primär- und sekundärseitigen selbstgeführten Stromrichters eines Serienresonanz-DC/DC-Stromrichters umsetzen zu können, werden einphasige Vollbrückenschaltungen oder eine Kombination aus einer einphasigen Halbbrückenschaltung und einer einphasigen Vollbrückenschaltung benötigt. Damit mittels der einphasigen Halbbrückenschaltung der Mittelfrequenz-Transformator kurzgeschlossen werden kann, ist ein zusätzlicher bidirektionaler Schalter notwendig. Dieser bidirektionale Schalter verbindet einen Verknüpfungspunkt zweier abschaltbarer Leistungshalbleiterschalter der Halbbrücke mit einem Verknüpfungspunkt zweier elektrisch in Reihe geschalteter Kondensatoren, die elektrisch zur Halbbrücke geschaltet sind.

Als einphasige Halbbrückenschaltung kann auch eine Dreipunktschaltung von abschaltbaren Leistungshalbleiterschaltern verwendet werden. Bei diesen Ausführungsformen des Serienresonanz-DC/DC-Stromrichters weist sein sekundärseitiger Stromrichter den Resonanzkondensator auf, der elektrisch in Reihe zur Streuinduktivität des Mittelfrequenz-Transformators geschaltet ist. Das heißt, der Mittelfrequenz-Transformator wird primärseitig kurzgeschlossen, wobei die abschaltbaren Leistungshalbleiterschalter des sekundärseitigen selbstgeführten Stromrichters gesperrt sind.

Weitere vorteilhafte Ausführungsformen der primär- und sekundärseitigen selbstgeführten Stromrichter des Serienresonanz-DC/DC-Stromrichters sind den Unteransprüchen 9 bis 11 zu entnehmen.

Zur weiteren Erläuterung der Erfindung wird auf die Zeichnung Bezug genommen, in der das erfindungsgemäße Verfahren erläutert wird und mehrere Ausführungsformen des Serienresonanz-DC/DC-Stromrichters schematisch dargestellt werden, der das erfindungsgemäße Verfahren umsetzen. Die Ansprüche 6, 7, 8 und 10 beziehen sich auf alternative Ausführungsformen von Vorrichtungen zur Durchführung des Verfahrens nach Anspruch 1.

FIG 1          zeigt einen Traktionsstromrichter mit einem bekannten Mehrpunkt-Mittelfrequenz-Einspeisestromrichter, in der

FIG 2          ist das Ersatzschaltbild eines Serienresonanz-DC/DC-Stromrichters des Mehrpunkt-Mittelfrequenz-Einspeisestromrichters gemäß FIG 1 unter Vernachlässigung einer Potentialtrennung und einem Übersetzungsverhältnisses von Eins dargestellt, die

FIG 3          zeigt das Ersatzschaltbild eines weiteren bekannten Serienresonanz-DC/DC-Stromrichters, in der

FIG 4          sind die Taktsignale der abschaltbaren Leistungshalbleiterschalter des Serienresonanz-DC/DC-Stromrichters gemäß FIG 2 über der Zeit t dargestellt, in der

FIG 5          sind die primär- und sekundärseitigen Zwischenkreisspannungen des Serienresonanz-DC/DC-Stromrichters gemäß FIG 2 über der Zeit t dargestellt, die

FIG 6          zeigt den zeitlichen Verlauf einer Spannung über dem Schwingkreis des Serienresonanz-DC/DC-Stromrichters nach FIG 2, wobei in

FIG 7          der zeitliche Verlauf des Resonanzstroms des Serienresonanz-DC/DC-Stromrichters der FIG 2 dargestellt ist, in der

FIG 8          ist ein Stromflusspfad eines ersten Verfahrensschritts eines bekannten Taktverfahrens des Serienresonanz-DC/DC-Stromrichters gemäß FIG 2 veranschaulicht, wobei in der

FIG 9          der Stromflusspfad eines dritten Verfahrensschritts des bekannten Taktverfahrens dargestellt ist, in den

FIG 10 bis 12          sind jeweils der zeitliche Verlauf eines Magnetisierungsstroms, eines resonanten Stromanteils und eines Gesamt-Stromrichterstroms bei unterschiedlichen Lastfällen dargestellt, die

FIG 13 und 14          veranschaulichen einen sekundärseitigen Kurzschluss eines Mittelfrequenz-Transformators mittels Vollbrücken bei positiven und negativem Magnetisierungsstrom, wobei die

FIG 15 und 16          einen sekundärseitigen Kurzschluss eines Mittelfrequenz-Transformators für zwei verschiedene Halbbrückenschaltungen mit Kurzschlussstrom zeigen, die

FIG 17 bis 20          zeigen Strom- und Spannungsverläufe sowie Taktungen der abschaltbaren Leistungshalbleiterschalter der primär- und sekundärseitigen selbstgeführten Stromrichter des Serienreso-

| | |
|---|---|
| | nanz-DC/DC-Stromrichters gemäß FIG 3 mit erfindungsgemäßer Taktpause, wobei in den |
| FIG 21 bis 24 | die Strom- und Spannungsverläufe sowie Taktungen des Serienresonanz-DC/DC-Stromrichters gemäß FIG 3 ohne Taktpausen veranschaulicht sind; in den |
| FIG 25 bis 29 | sind für verschiedene Verfahrensschritte des erfindungsgemäßen Verfahren jeweils der Stromfluss eines Serienresonanz-DC/DC-Stromrichters gemäß FIG 3 dargestellt, die |
| FIG 30 bis 32 | zeigen Strom- und Spannungsverläufe sowie Taktungen abschaltbarer Leistungshalbleiterschalter des Serienresonanz-DC/DC-Stromrichters gemäß FIG 3 beim Betrieb mit Taktpause, wenn die Leistungshalbleiterschalter nicht vollständig ausgeräumt werden, wobei die |
| FIG 33 bis 35 | die Verläufe der FIG 30 bis 32 ohne Taktpause darstellen, wenn die Leistungshalbleiterschalter nicht vollständig ausgeräumt werden, in den |
| FIG 36 und 37 | sind jeweils der zeitliche Verlauf eines Magnetisierungsstroms, eines resonanten Stromanteils und eines Stromrichterstroms bei verschiedenen Frequenzen dargestellt und die |
| FIG 38 bis 41 | zeigen verschiedene Ausführungsformen des primär- und sekundärseitigen Stromrichters eines Serienresonanz-DC/DC-Stromrichters, die das erfindungsgemäße Verfahren umsetzen können. |

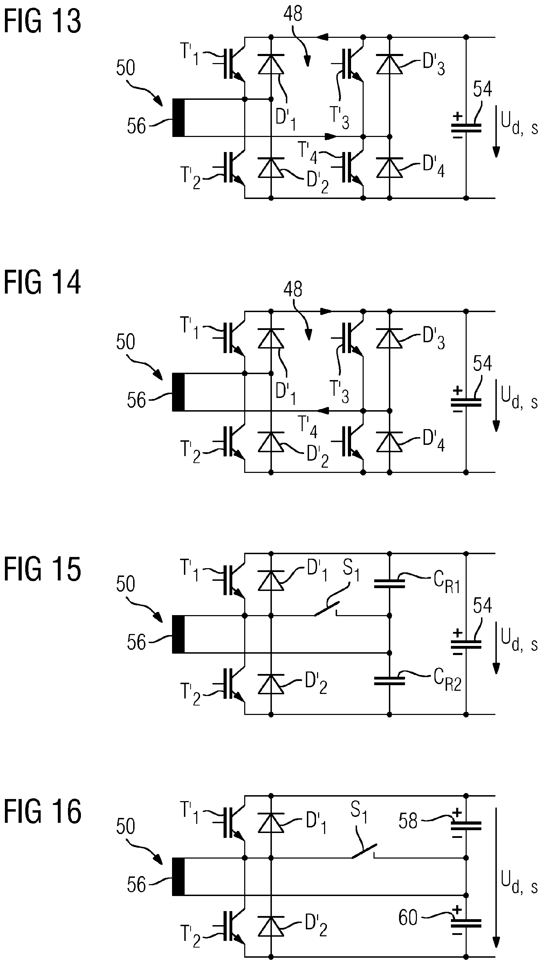

Gemäß dem erfindungsgemäßen Verfahren zum Takten von abschaltbaren Leistungshalbleiterschaltern $T_1,...,T_4$ bzw. $T'_1$ , ..., $T'_4$ des primär- bzw. sekundärseitigen selbstgeführten Stromrichters 46 bzw. 48 des Serienresonanz-DC/DC-Stromrichters 44 gemäß FIG 2 soll für eine Taktpause variabler Länge der Mittelfrequenz-Transformator 50 kurzgeschlossen werden. Ob dabei der Mittelfrequenz-Transformator 50 primär- oder sekundärseitig kurzgeschlossen wird, spielt keine Rolle. Zu beachten ist, dass der Resonanzkondensator $C_R$ sich nicht im Kurzschlussstrompfad befindet und dass die abschaltbaren Leistungshalbleiterschalter $T_1, ..., T_4$ und $T'_1 ,..., T'_4$ des jeweils anderen selbstgeführten Stromrichters, nämlich sekundär- oder primärseitig, gesperrt sind. Bezogen auf die Ausführungsform des Serienresonanz-DC/DC-Stromrichters 44 gemäß FIG 2 kann der Mittelfrequenz-Transformator 50 nur sekundärseitig kurzgeschlossen werden. Aus diesem Grund sind in den FIG 13 und 14 nur der sekundärseitige selbstgeführte Stromrichter 48 des Serienresonanz-DC/DC-Stromrichters 44 der FIG 2 jeweils dargestellt, wobei vom Mittelfrequenz-Transformator 50 nur dessen Sekundärwicklung gezeigt wird. Bei einer Vollbrückenschaltung kann ein Kurzschluss des Mittelfrequenz-Transformators 50 ohne zusätzliche Bauelemente erfolgen. Werden die abschaltbaren Leistungshalbleiterschalter $T'_1$ und $T'_3$ gleichzeitig angesteuert, wogegen die abschaltbaren Leistungshalbleiterschalter $T'_2$ und $T'_4$ gesperrt sind, wird der Mittelfrequenz-Transformator 50 sekundärseitig kurzgeschlossen, wodurch ein Strom über den oberen Teil der Brücke fließt. Je nach Vorzeichen dieses Stroms fließt dieser durch den abschaltbaren Leistungshalbleiterschalter $T'_1$ und die Invers-Diode $D'_3$ des abschaltbaren Leistungshalbleiterschalters $T'_3$ (FIG 13) oder durch den abschaltbaren Leistungshalbleiterschalter $T'_3$ und die Invers-Diode $D'_1$ des abschaltbaren Leistungshalbleiterschalters $T'_1$ (FIG 14). Dadurch fällt über den Mittelfrequenz-Transformator 50 nur die Summenspannung der Flussspannungen der beiden Halbleiter $T'_1$ , $D'_3$ bzw. $D'_1$ , $T'_3$ ab. Ein Kurzschluss kann auch mittels der unteren abschaltbaren Leistungshalbleiterschalter $T'_2$ und $T'_4$ erzeugt werden.

Wird als primär- bzw. sekundärseitiger selbstgeführter Stromrichter 46 bzw. 48 eine einphasige Halbbrücke verwendet, so wird für das primär- bzw. sekundärseitige Kurzschließen des Mittelfrequenz-Transformators 50 ein zusätzlicher bidirektionaler Schalter $S_1$ benötigt. Dieser bidirektionale Schalter $S_1$ kann beispielsweise aus zwei elektrisch in Reihe geschalteten abschaltbaren Leistungshalbleiterschaltern bestehen. In FIG 15 ist eine erste Ausführungsform einer einphasigen Halbbrückenschaltung dargestellt. Diese Halbbrückenschaltung besteht aus einer Reihenschaltung zweier abschaltbarer Leistungshalbleiterschalter $T'_1$ und $T'_2$ jeweils mit zugehöriger Invers-Diode $D'_1$ und $D'_2$ und einem Gleichspannungskondensator 54, an den die sekundärseitige Zwischenkreisspannung $U_{d,s}$ ansteht. Dieser Gleichspannungskondensator 54 ist elektrisch parallel zur Reihenschaltung der beiden abschaltbaren Leistungshalbleiterschalter $T'_1$ und $T'_2$ geschaltet. Ebenfalls ist eine Reihenschaltung zweier Resonanz-Kondensatoren $C_{R1}$ und $C_{R2}$ elektrisch zur Reihenschaltung der beiden abschaltbaren Leistungshalbleiterschalter $T'_1$ und $T'_2$ parallel geschaltet. Der zusätzliche bidirektionale Schalter $S_1$ verbindet den Verbindungspunkt der beiden abschaltbaren Leistungshalbleiterschalter

$T_1'$ und $T_2'$ mit dem Verbindungspunkt der beiden Resonanz-Kondensatoren $C_{R1}$ und $C_{R2}$. Die Sekundärwicklung 56 des Mittelfrequenz-Transformators 50 ist ebenfalls mit den beiden Verbindungspunkten elektrisch leitend verbunden. Wird der bidirektionale Schalter $S_1$ geschlossen und sind die beiden abschaltbaren Leistungshalbleiterschalter $T_1'$ und $T_2'$ gesperrt, fließt der Magnetisierungsstrom als sekundärseitiger Kurzschlussstrom über die Sekundärwicklung 56 des Mittelfrequenz-Transformators 50.

In FIG 16 ist eine zweite Ausführungsform einer Halbleiterbrückenschaltung näher dargestellt. Diese unterscheidet sich von der Ausführungsform der FIG 15 dadurch, dass die beiden Resonanz-Kondensatoren $C_{R1}$ und $C_{R2}$ und der Gleichspannungs-Kondensator 54 in zwei elektrisch in Reihe geschalteten Kondensatoren 58 und 60 zusammengefasst sind. Die sekundärseitige Zwischenkreisspannung $U_{d,s}$ fällt nun an dieser Reihenschaltung ab. In beiden Fällen führt der bidirektionale Schalter $S_1$ nur den Magnetisierungsstrom im, der amplitudenmäßig um ein Vielfaches kleiner ist als ein Stromrichterstrom (Laststrom). Dadurch kann dieser bidirektionale Schalter $S_1$ sehr klein dimensioniert werden.

Für die Realisierung der Taktpause variabler Länge müssen die abschaltbaren Leistungshalbleiter der primär- und sekundärseitigen selbstgeführten Stromrichter 46 und 48 des Serienresonanz-DC/DC-Stromrichters 44 nach dem erfindungsgemäßen Taktverfahren angesteuert werden. Dabei sollen die Schaltverluste so gering wie möglich bleiben. Das erfindungsgemäße Taktverfahren unterscheidet sich vom bekannten Taktverfahren dadurch, dass nach jedem Resonanzstromfluss eine Taktpause variabler Länge eingefügt wird, an der sich dann die bekannte Wechselrichtersperrzeit $T_v$ anschließt. Eine komplette Taktperiode des erfindungsgemäßen Taktverfahrens beinhaltet folglich zwei Taktpausen, wodurch sich eine neue Schaltperiodendauer ergibt:

$$T_S = T_{SO} + T_p = 1/f_{SO} + T_p$$

Die Dauer der zwei Taktpausen, also die Zeit, um welche sich die ursprüngliche Schaltperiodendauer $T_{so}$ verlängert, ist die Taktpausenzeit $T_p$. Vorteilhaft ist, wenn die beiden Taktpausen einer Schaltperiode dieselbe Dauer ($T_{p/2}$) aufweisen. Dadurch gleichen sich ungewollte Effekte aufgrund der symmetrischen Bedingungen gegenseitig aus. Gleichzeitig wird sichergestellt, dass die am Mittelfrequenz-Transformator 50 anliegende Wechselspannung einen Mittelwert von Null besitzt. Dadurch ist der Magnetisierungsstrom im gleichanteilsfrei.

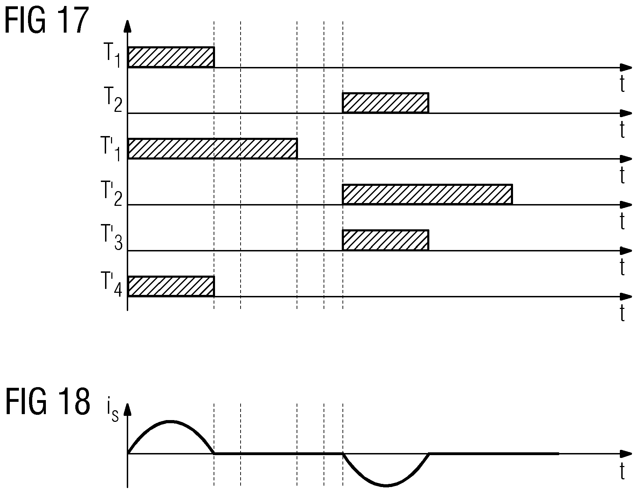

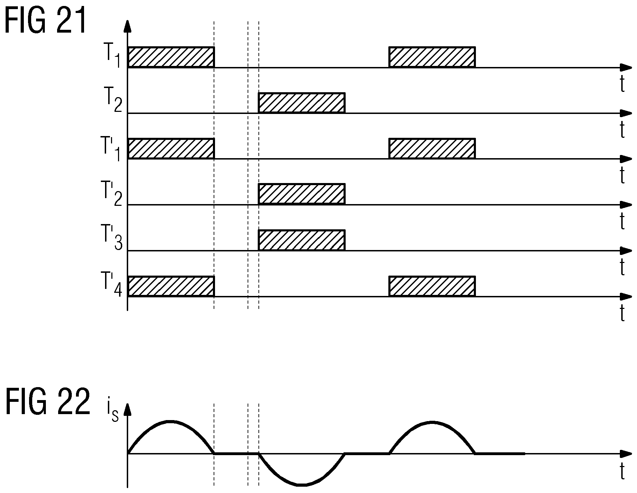

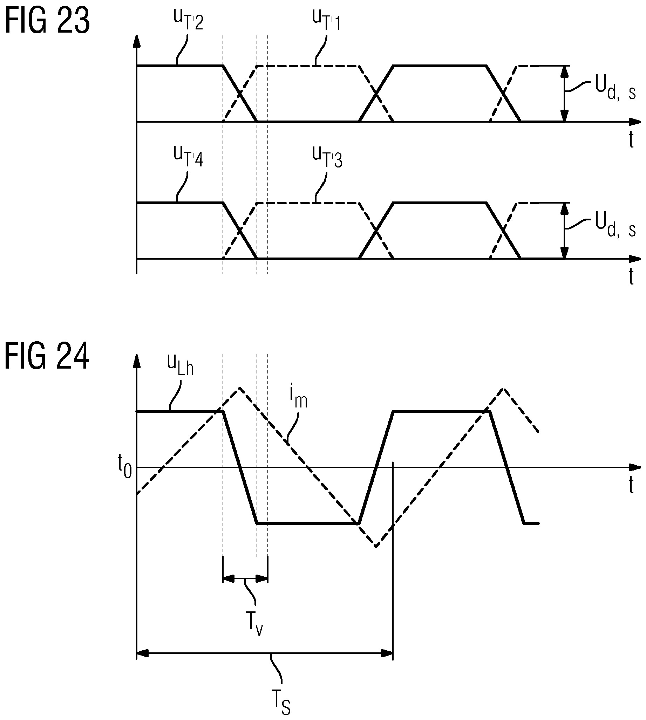

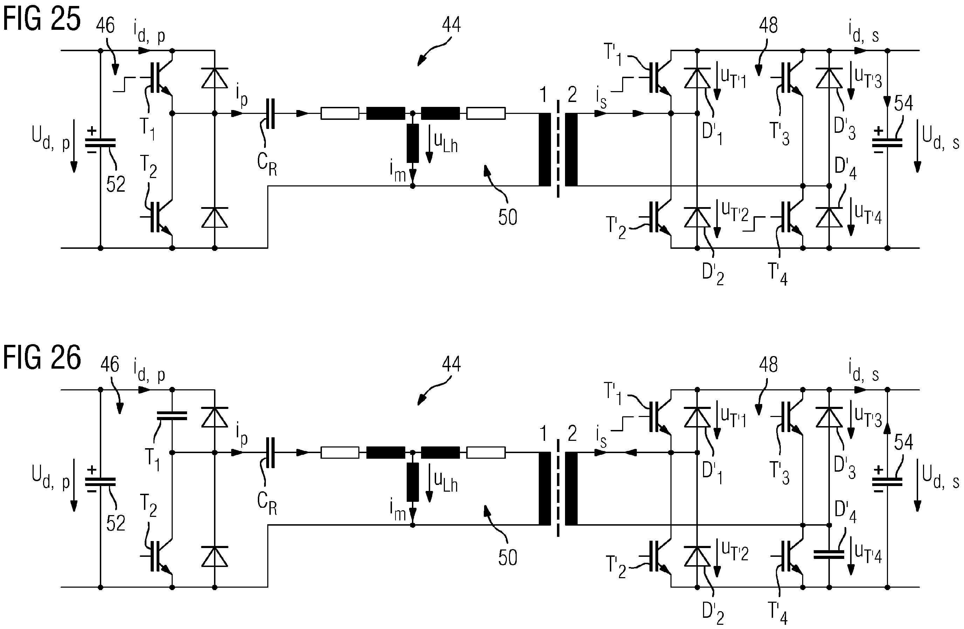

Anhand der Diagramme der FIG 17 bis 20 soll das erfindungsgemäße Taktverfahren an einem Serienresonanz-DC/DC-Stromrichter 44 in der Ausführungsform gemäß FIG 3 erläutert werden. In den FIG 25 bis 29 sind die Stromflusspfade für verschiedene Zustände des Serienresonanz-DC/DC-Stromrichters 44 bei Betrieb mit dem erfindungsgemäßen Taktverfahren dargestellt. In diesen FIG 25 bis 29 sind angesteuerte abschaltbare Leistungshalbleiterschalter mittels einer Schaltflanke gekennzeichnet, wobei nicht ausgeräumte abschaltbare Leistungshalbleiterschalter vereinfacht als Kapazität dargestellt sind. Bei der Erläuterung des erfindungsgemäßen Taktverfahrens findet ein Leistungsfluss von der Primär- zur Sekundärseite statt. Zum Vergleich sind in den FIG 21 bis 24 Strom- und Spannungsverläufe sowie die Taktungen der abschaltbaren Leistungshalbleiterschalter $T_1$, $T_2$, $T_1'$, $T_2'$, $T_3'$ und $T_4'$ beim Betrieb mit dem bekannten Taktverfahren, d.h. ohne Taktpause, über der Zeit t dargestellt.

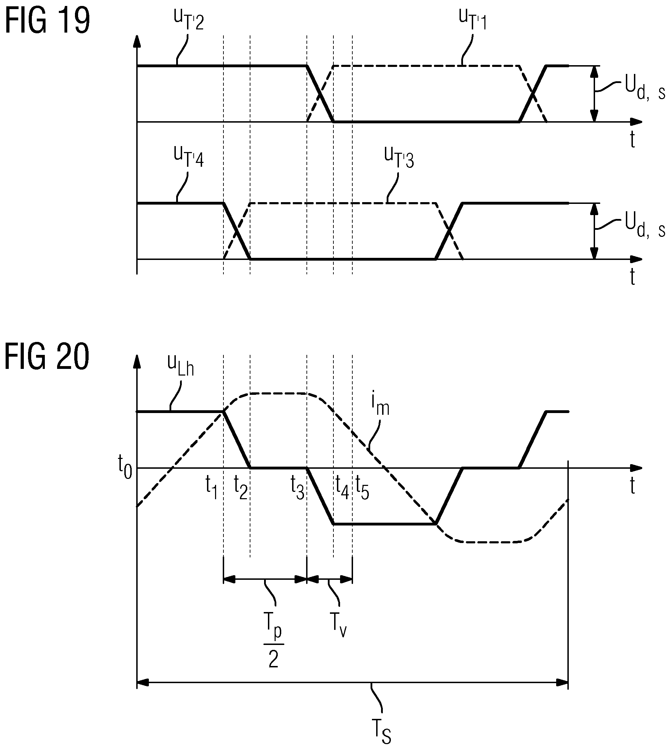

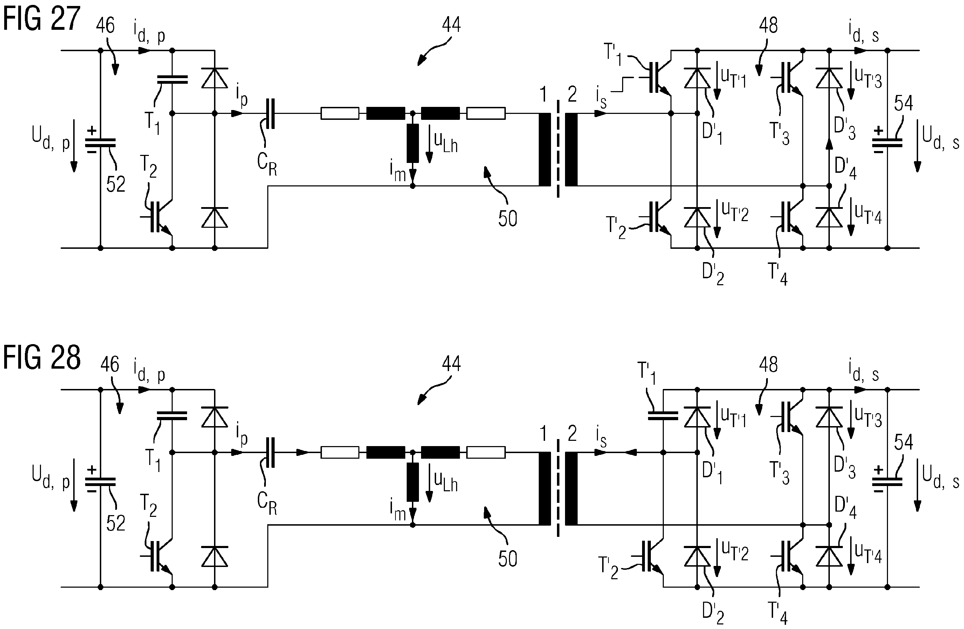

Zum Zeitpunkt $t_0$ beginnt die Schaltperiode $T_s$. Es werden wie beim bekannten Taktverfahren die abschaltbaren Leistungshalbleiterschalter $T_1$, $T_1'$ und $T_4'$ auf Durchlass geschaltet. Der Resonanzstrom $i_s$ beginnt primärseitig durch den abschaltbaren Leistungshalbleiterschalter $T_1$ und sekundärseitig durch die Invers-Dioden $D_1'$ und $D_4'$ zu fließen (FIG 25). Zum Zeitpunkt $t_1$ ist die halbe Resonanzperiodendauer vorbei und der Resonanzstrom $i_s$ hat seinen Nulldurchgang erreicht. Abweichend zum herkömmlichen Verfahren wird der abschaltbare Leistungshalbleiterschalter $T_1'$ des sekundärseitigen Stromrichters 48 nicht ausgeschaltet, wie die abschaltbaren Leistungshalbleiterschalter $T_1$ und $T_4'$ (FIG 17). Der Magnetisierungsstrom im, weitergetrieben von der Hauptinduktivität $L_h$, kommutiert von der Invers-Diode $D_1'$ auf den zugehörigen abschaltbaren Leistungshalbleiterschalter $T_1'$ und räumt den abgeschalteten Leistungshalbleiterschalter $T_1$, und die Invers-Diode $D_4'$ aus (FIG 26). Dadurch steigen die Spannungen über diese Halbleiterschalter $T_1$ und $D_4'$ an. Die Spannung am Mittelfrequenz-Transformator 50, welche näherungsweise der Spannung $u_{Lh}$ (FIG 20) über der Hauptinduktivität $L_h$ entspricht, sinkt in dem Maße, mit dem die Spannung $u_{T'3}$ (FIG 19) steigt. Zum Zeitpunkt $t_2$ ist die Spannung $u_{T'3}$ durch das Abfallen der Spannung $u_{T'4}$ über die Invers-Diode D4 auf die negative Flussspannung der Diode $D_3'$ angestiegen, der Magnetisierungsstrom $i_m$ ist auf die Diode $D_3'$ kommutiert. Dadurch ist der Mittelfrequenz-Transformator 50 sekundärseitig kurzgeschlossen (FIG 27). An der Hauptinduktivität $L_h$ des Mittelfrequenz-Transformators 50 liegen nun noch die Durchlassspannungen der Invers-Diode $D_3'$ und des abschaltbaren Leistungshalbleiterschalters $T_1'$ an. Der Magnetisie-

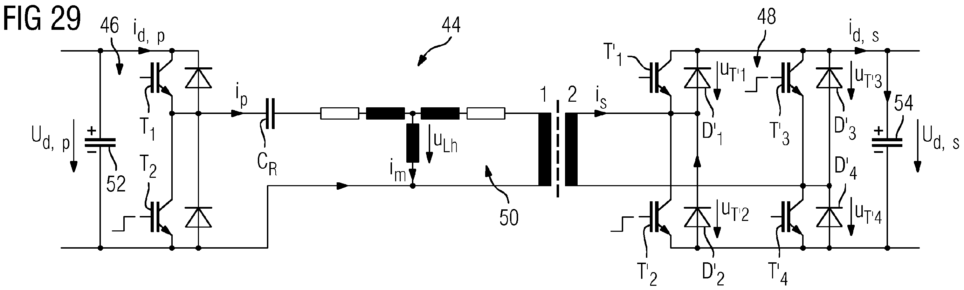

rungsstrom $i_m$ fließt ausschließlich auf der Sekundärseite des Serienresonanz-DC/DC-Stromrichters 44 und bleibt nahezu konstant (FIG 27). Zum Zeitpunkt $t_3$ wird die Taktpause durch Sperren des abschaltbaren Leistungshalbleiterschalters $T'_1$ des sekundärseitigen Stromrichters 48 des Serienresonanz-DC/DC-Stromrichters 44 beendet und es folgt die übliche Wechselrichtersperrzeit $T_v$. Der Magnetisierungsstrom $i_m$ räumt die Speicherladungen der Halbleiter weiter aus (FIG 28). Dieser Vorgang ist zum Zeitpunkt $t_4$ beendet und der Magnetisierungsstrom $i_m$ kommutiert auf die Invers-Dioden $D_2$ und $D'_2$. Ab dem Zeitpunkt $t_5$ beginnt die zweite Hälfte der Taktperiode $T_s$, welche wieder mit einem Resonanzstromfluss beginnt (FIG 29). Der Ablauf der zweiten Hälfte ist analog zum Ablauf der ersten Hälfte und unterscheidet sich nur in den beteiligten Halbleitern und der Richtung des Stromflusses.

Die Schaltvorgänge der abschaltbaren Leistungshalbleiterschalter $T_1$, $T_2$, $T'_1$, $T'_2$, $T'_3$ und $T'_4$ bei Betrieb mit und ohne Taktpausenzeit unterscheiden sich kaum. Beide Verfahren haben die gleiche Anzahl von Schalthandlungen und es handelt sich um ZCS und ZVS-Einschalten. Der größte Unterschied besteht im versetzten Schalten bei Betrieb mit Taktpause.

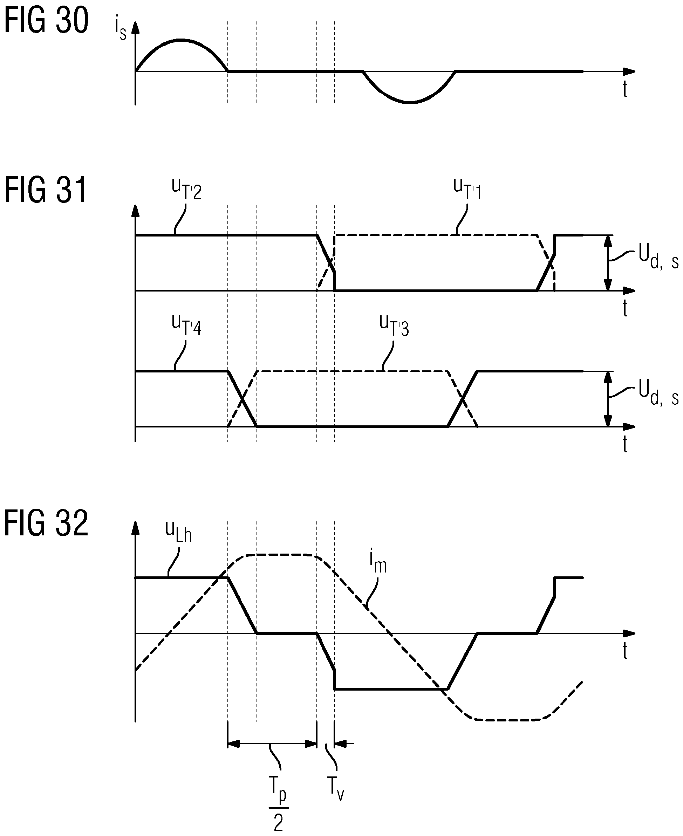

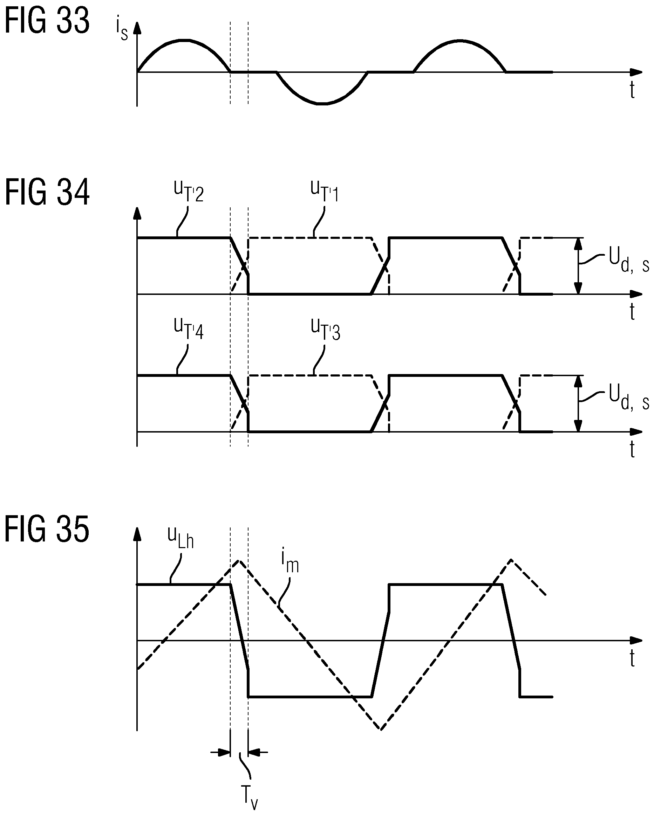

Reicht hingegen die Wechselrichtersperrzeit $T_v$ nicht aus, um die Halbleiter komplett auszuräumen, ergeben sich abweichende Verläufe von Strom- und Spannungsverläufen, die in den FIG 30 bis 32 für das erfindungsgemäße Taktverfahren und in den FIG 33 bis 35 für das bekannte Taktverfahren jeweils über der Zeit t dargestellt sind.

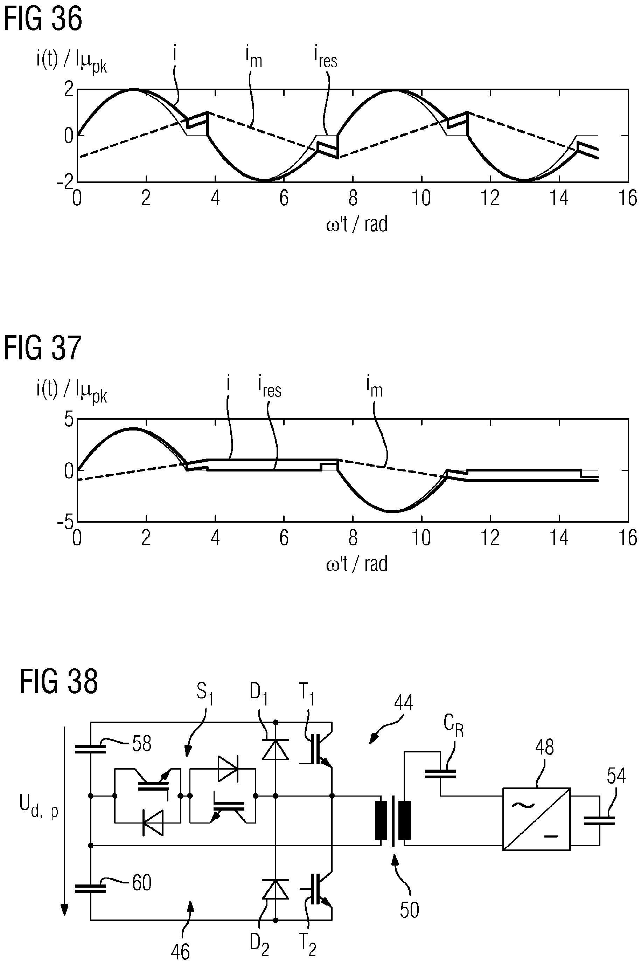

Wird der Magnetisierungsstrom $i_m$ durch eine vernachlässigbare Hauptfeldspannung des Mittelfrequenz-Transformators 50 konstant gehalten, lassen sich die sinusförmigen Stromkuppen weiter auseinanderziehen, wodurch die Betriebsfrequenz reduziert wird und so die Schaltverluste reduziert werden (FIG 36 und 37). Allerdings steigt dabei die Amplitude der Sinuskuppe entsprechend, so dass sich der gleiche Leistungsdurchsatz ergibt.

Serienresonanz-DC/DC-Stromrichter, die mittels des erfindungsgemäßen Taktverfahrens betrieben werden können, müssen eine vernachlässigbare Hauptfeldspannung am Mittelfrequenz-Transformator anlegen können, damit der Hauptfluss konstant bleibt und der Transformatorkern nicht gesättigt und der Magnetisierungsstrom beherrscht wird, der für das Ausräumen der zu sperrenden Halbleiter notwendig ist.

In der FIG 38 ist eine Ausführungsform eines Serienresonanz-DC/DC-Stromrichters 44 dargestellt, wobei der primärseitig selbstgeführte Stromrichter 46 als einphasige Halbbrückenschaltung gemäß FIG 16 und der sekundärseitige selbstgeführte Stromrichter 48 als einphasige Vollbrückenschaltung ausgebildet ist. Der

Schalter $S_1$ weist zwei IGBTs auf, die mittels ihrer Emitter-Anschlüsse elektrisch in Reihe geschaltet sind. Wie bereits erwähnt, ist die Hauptfeldspannung des Mittelfrequenz-Transformators 50 genau dann vernachlässigbar (Nullzustand), wenn der bidirektionale Schalter $S_1$ eingeschaltet und die Schalter $T_1$ und $T_2$ der Halbbrückenschaltung ausgeschaltet sind. Der bidirektionale Schalter $S_1$ muss nur auf die halbe Zwischenkreisspannung $U_{d,p}$ und den zu führenden Magnetisierungsstrom $i_m$ ausgelegt werden.

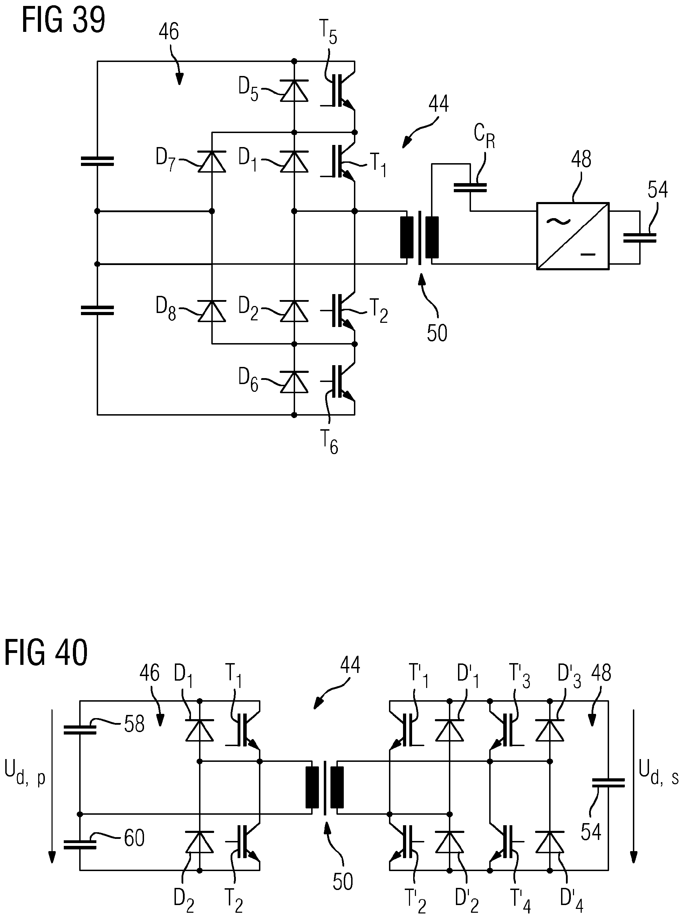

In FIG 39 ist ein Serienresonanz-DC/DC-Stromrichter 44 dargestellt, dessen primärseitiger selbstgeführter Stromrichter 46 als einphasige 3-Punkt NPC-Halbleiterbrücke ausgeführt ist. Der sekundärseitige selbstgeführte Stromrichter 48 ist wie in der Ausführungsform gemäß FIG 38 als einphasige Vollbrückenschaltung ausgeführt. Der Nullzustand der Hauptfeldspannung des Mittelfrequenz-Transformators 50 lässt sich mit folgendem Schaltzustand einstellen: Die abschaltbaren Leistungshalbleiterschalter $T_1$ und $T_2$ sind leitend geschaltet, wobei die abschaltbaren Leistungshalbleiterschalter $T_5$ und $T_6$ gesperrt sind.

In FIG 40 ist der primärseitige selbstgeführte Stromrichter 46 als einfache Halbbrückenschaltung ausgeführt, die der Ausführungsform der FIG 16 ohne bidirektionalem Schalter $S_1$ entspricht. Das heißt, der Gleichspannungs-Kondensator 52 und die beiden Resonanz-Kondensatoren $C_{R1}$ und $C_{R2}$ sind zu zwei elektrisch in Reihe geschalteten Kondensatoren 58 und 60 vereint. Der sekundärseitige selbstgeführte Stromrichter 48 des Serienresonanz-DC/DC-Stromrichters 44 entspricht der Ausführungsform der FIG 3. Bei dieser Ausführungsform des Serienresonanz-DC/DC-Stromrichters 44 wird der Nullzustand im Mittelfrequenz-Transformator 50 vom sekundärseitigen Stromrichter 48 eingeprägt.

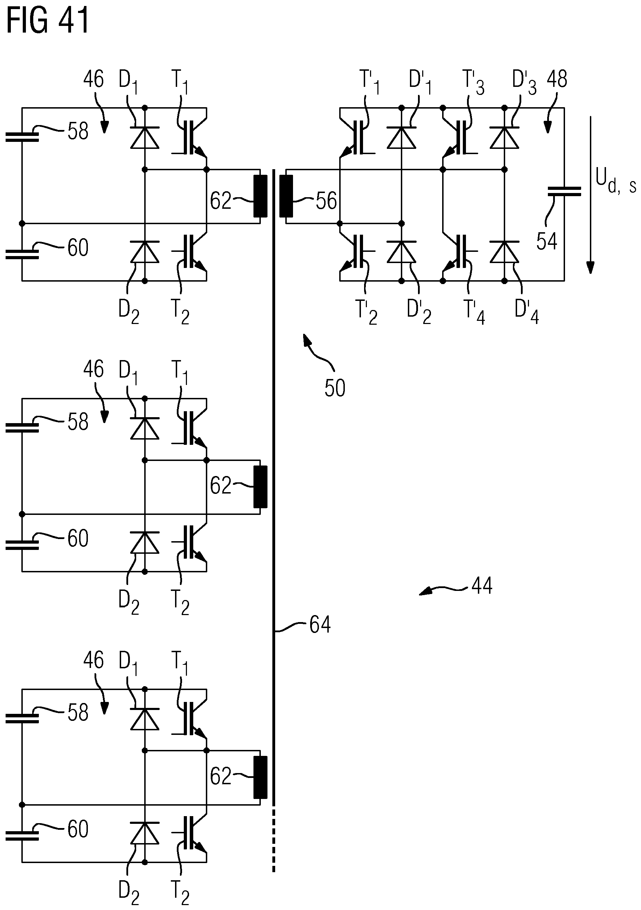

In FIG 41 ist eine Ausführungsform eines Serienresonanz-DC/DC-Stromrichters 44 dargestellt, wobei sein primärseitiger Stromrichter 46 mehrere einphasige einfache Halbbrückenschaltungen gemäß der FIG 40 aufweist und sein sekundärseitiger Stromrichter 48 als einphasige Vollbrückenschaltung ausgebildet ist. Der Mittelfrequenz-Transformator 50 weist entsprechend der Anzahl der primärseitigen Stromrichter 46 Primärwicklungen 62 auf, die zusammen mit einer Sekundärwicklung 56 auf einem Kern 64 angeordnet sind. Um bei dieser Ausführungsform des Serienresonanz-DC/DC-Stromrichters 44 einen Nullzustand am Mittelfrequenz-Transformator 50 einzuprägen, werden die abschaltbaren Leistungshalbleiterschalter $T'_1$ und $T'_3$ bzw. $T'_2$ und $T'_4$ leitend geschaltet, wobei die abschaltbaren Leistungshalbleiterschalter $T'_2$ und $T'_4$ bzw. $T'_1$ und $T'_3$ des sekundärseitigen Stromrichters 48 und die abschaltbaren Leistungshalbleiterschalter $T_1$ und $T_2$ jedes primärseitigen Stromrichters 46 gesperrt sind.

Das erfindungsgemäße Verfahren ist eine Modifikation des bekannten Verfahrens und beruht darauf, jede Halbleiterschaltperiode um eine variable Taktpausenzeit zu verlängern. Während dieser Zeit wird der im Serienresonanz-DC/DC-Stromrichter 44 eingesetzte Mittelfrequenz-Transformator kurzgeschlossen. So wird vermieden, dass die reduzierte Frequenz den Mittelfrequenz-Transformator in die Sättigung treibt, wodurch zusätzliche Verluste entstünden.

Durch das primär- oder sekundärseitige Kurzschließen des Mittelfrequenz-Transformators eines Serienresonanz-DC/DC-Stromrichters wird der Fluss im Transformator konstant gehalten. Das gestattet die Verringerung der Betriebsfrequenz und so die Reduzierung der Schaltverluste im speisenden Stromrichter des Serienresonanz-DC/DC-Stromrichters. Idealerweise wird der Nullzustand direkt nach der Sinuskuppe des Laststroms eingefügt. Dadurch können der Wirkungsgrad des Serienresonanz-DC/DC-Stromrichters gegenüber dem festfrequenten Betrieb erhöht werden. Dadurch kann dieser Serienresonanz-DC/DC-Stromrichter auch bei Applikationen verwendet werden, die durch eine hohe Häufigkeit von Teillastbetriebsfällen ausgezeichnet sind.

## Patentansprüche

1. Verfahren zum Takten von abschaltbaren Leistungshalbleiterschaltern ($T_1,...,T_4$; $T'_1,..., T'_4$) eines primär- und sekundärseitigen selbstgeführten Stromrichters (46,48) eines Serienresonanz-DC/DC-Stromrichters (44) eines Mehrpunkt-Mittelfrequenz-Einspeisestromrichters eines Traktionsstromrichters, wobei die beiden selbstgeführten Stromrichter (46,48) wechselspannungsseitig mittels eines Mittelfrequenz-Transformators (50) miteinander verknüpft sind, wobei in Reihe zur Streuinduktivität ($L_\sigma$) des Mittelfrequenz-Transformators (50) ein Resonanzkondensator ($C_R$) geschaltet ist, und wobei jedem dieser beiden selbstgeführten Stromrichter (46,48) gleichspannungsseitig ein Zwischenkreiskondensator (52,54) elektrisch parallel geschaltet ist, mit folgenden Verfahrensschritten:

   a) Synchrones und phasengleiches Takten der abschaltbaren Leistungshalbleiterschalter ($T_1,...,T_4$; $T'_1,..., T'_4$) der beiden selbstgeführten Stromrichter (46,48) des Serienresonanz-DC/DC-Stromrichters (44) derart, dass an deren Klemmen im AC-Zwischenkreis jeweils eine positive Spannung ($U_{d,p}$, $U_{d,s}$) ansteht,

   b) Sperren der abschaltbaren Leistungshalbleiterschalter ($T_1,...,T_4$; $T'_1,..., T'_4$) der beiden selbstgeführten Stromrichter (46,48) für eine vorbestimmte Wechselrichtersperrzeit ($T_v$),

   c) synchrones und phasengleiches Takten der abschaltbaren Leistungshalbleiterschalter ($T_1,...,T_4$; $T'_1,..., T'_4$) der beiden selbstgeführten Stromrichter (46,48) des Serienresonanz-DC/DC-Stromrichters (44) derart, dass an deren Klemmen im AC-Zwischenkreis jeweils eine negative Spannung ($U_{d,p}$, $U_{d,s}$) ansteht,

   d) Sperren der abschaltbaren Leistungshalbleiterschalter ($T_1,...,T_4$; $T'_1,..., T'_4$) der beiden selbstgeführten Stromrichter (46,48) für eine vorbestimmte Wechselrichtersperrzeit ($T_v$),

   **dadurch gekennzeichnet, dass** jeweils nach den Verfahrensschritten a) und c) für eine Taktpause variabler Länge die abschaltbaren Leistungshalbleiterschalter ($T_1,...,T_4$; $T'_1,..., T'_4$) des primär- oder sekundärseitigen selbstgeführten Stromrichters (46,48) des Serienresonanz-DC/DC-Stromrichters (44) derart angesteuert werden, dass der Mittelfrequenz-Transformator (50) des Serienresonanz-DC/DC-Stromrichters (44) primär- oder sekundärseitig kurzgeschlossen ist, wobei die abschaltbaren Leistungshalbleiterschalter ($T_1,...,T_4$; $T'_1,..., T'_4$) des sekundär- oder primärseitigen selbstgeführten Stromrichters (46,48) des Serienresonanz-DC/DC-Stromrichters (44) gesperrt sind.

2. Verfahren nach Anspruch 1, **dadurch gekennzeichnet, dass** die beiden Taktpausen variabler Länge während einer Schaltperiodendauer ($T_{so}$) so gewählt werden, dass die mittlere Spannung ($u_{Lh}$) an der Hauptinduktivität ($L_h$) Null ist.

3. Verfahren nach Anspruch 1 oder 2, **dadurch gekennzeichnet, dass** der Mittelfrequenz-Transformator (50) des Serienresonanz-DC/DC-Stromrichters (44) derart kurzgeschlossen wird, dass der Resonanzkondensator ($C_R$) sich nicht im kurzgeschlossenen Stromkreis befindet.

4. Verfahren nach Anspruch 1, **dadurch gekennzeichnet, dass** die beiden Taktpausen variabler Länge einer Schaltperiodendauer ($T_{so}$) so bemessen sind, dass der Mittelfrequenz-Transformator (50) nicht in Sättigung gerät.

5. Verfahren nach Anspruch 1, **dadurch gekennzeichnet, dass** die Wechselrichtersperrzeit ($T_v$) in zwei gleiche Teile aufgeteilt ist und derart zeitlich zueinander angeordnet sind, dass zeitlich zwischen ihnen die Taktpause variabler Länge angeordnet ist.

6. Vorrichtung zur Durchführung des Verfahrens nach einem der vorgenannten Ansprüche, wobei der primär- und sekundärseitige selbstgeführte Stromrichter (46,48) jeweils als eine einphasige Vollbrückenschaltung ausgebildet ist und die Vorrichtung derart angepasst ist, dass das Verfahren im Betrieb durchgeführt wird.

7. Vorrichtung zur Durchführung des Verfahrens nach einem der Ansprüche 1 bis 5, wobei der primärseitige selbstgeführte Stromrichter (46) als einphasige Halbbrückenschaltung ausgebildet ist, der zwei elektrisch in Reihe geschaltete Kondensatoren (58,60) elektrisch parallel geschaltet ist, wobei ein bidirektionaler Schalter ($S_1$) einen Verbindungs-punkt dieser beiden Kondensatoren (58,60) mit einem wechselspannungsseitigen Anschluss der einphasigen Halbbrückenschaltung elektrisch leitend verbindet und wobei der sekundärseitige selbstgeführte Stromrichter (48) als einphasige Vollbrückenschaltung ausgebildet ist und die Vorrichtung derart angepasst ist, dass das Verfahren im Betrieb durchgeführt wird.

8. Vorrichtung zur Durchführung des Verfahrens nach einem der Ansprüche 1 bis 5, wobei der primärseitige selbstgeführte Stromrichter (46) als einphasige 3-Punkt NPC-Halbbrückenschaltung ausgebildet ist und wobei der sekundärseitige selbstgeführte Stromrichter (48) als einphasige Vollbrückenschaltung ausgebildet ist und die Vorrichtung derart angepasst ist, dass das Verfahren im Betrieb durchgeführt wird.

9. Vorrichtung nach einem der Ansprüche 6 bis 8, **da-durch gekennzeichnet, dass** einem wechselspan-nungsseitigen Anschluss der einphasigen Vollbrü-ckenschaltung des sekundärseitigen selbstgeführ-ten Stromrichters (48) ein Resonanzkondensator ($C_R$) vorgeschaltet ist.

10. Vorrichtung zur Durchführung des Verfahrens nach einem der Ansprüche 1 bis 5, wobei der sekundärseitige selbstgeführte Stromrichter (48) als einphasige Vollbrückenschaltung ausgebildet ist und der primärseitige selbstgeführte Stromrichter (46) als einphasige Halbbrückenschaltung ausgebildet ist, in der der Resonanzkondensator ($C_R$) integriert ist, wobei die Vorrichtung derart angepasst ist, dass das Verfahren im Betrieb durchgeführt wird.

11. Vorrichtung nach Anspruch 10 mit einer Vielzahl von primärseitigen selbstgeführten Stromrichtern (46), **dadurch gekennzeichnet, dass** der Mittelfrequenz-Transformator (50) primärseitig für jeden primärseitigen selbstgeführten Stromrichter (46) eine Primärwicklung (62) und sekundärseitig eine Sekundärwicklung (56) aufweist, wobei diese Wicklungen (62, 56) auf einem Kern (64) angeordnet sind.

## Claims

1. Method for modulating turn-off power semiconductor switches ($T_1,...,T_4$; $T'_1,...,T'_4$) of a primary-side and secondary-side self-commutated converter (46, 48) of a series resonant DC/DC converter (44) of a multi-level medium-frequency infeed of a traction converter, wherein the two self-commutated converters (46, 48) are linked to one another on the AC voltage side by means of a medium-frequency transformer (50), wherein a resonant capacitor ($C_R$) is connected in series with the leakage inductance ($L_\sigma$) of the medi-um-frequency transformer (50), and wherein an intermediate circuit capacitor (52, 54) is connected electrically in parallel on the DC voltage side to each of these two self-commutated converters (46, 48), with the following method steps:

   a) synchronous and in-phase modulation of the turn-off power semiconductor switches ($T_1$, ...,$T_4$; $T'_1$,...,$T'_4$) of the two self-commutated converters (46, 48) of the series resonant DC/DC converter (44) such that a positive voltage ($U_{d,p}$, $U_{d,s}$) is present on the terminals thereof in the AC intermediate circuit in each case,
   b) blocking the turn-off power semiconductor switches ($T_1$,...,$T_4$; $T'_1$, ...,$T'_4$) of the two self-commutated converters (46, 48) for a predeter-mined inverter cutoff time ($T_v$),
   c) synchronous and in-phase modulation of the turn-off power semiconductor switches ($T_1$,...,$T_4$; $T'_1$, ...,$T'_4$) of the two self-commutated converters (46, 48) of the series resonant DC/DC converter (44) such that a negative voltage ($U_{d,p}$, $U_{d,s}$) is present on the terminals thereof in the AC intermediate circuit in each case,
   d) blocking the turn-off power semiconductor switches ($T_1$,...,$T_4$; $T'_1$,...,$T'_4$) of the two self-commutated converters (46, 48) for a predeter-mined inverter cutoff time ($T_v$),

   **characterised in that** according to the method steps a) and c), for a modulation pause of a variable length the turn-off power semiconductor switches ($T_1$,...,$T_4$; $T'_1$, ...,$T'_4$) of the primary-side or secondary-side self-commutated converter (46, 48) of the series resonant DC/DC converter (44) are actuated such that the medium-frequency transformer (50) of the series resonant DC/DC converter (44) is short-circuited on the primary side or secondary side, wherein the turn-off power semiconductor switches ($T_1$,...,$T_4$; $T'_1$, ...,$T'_4$) of the secondary-side or primary-side self-commutated converter (46, 48) of the series resonant DC/DC converter (44) are blocked.

2. Method according to claim 1, **characterised in that** the two modulation pauses of a variable length are selected during a switching period duration ($T_{SO}$)

such that the mean voltage ($u_{Lh}$) on the main inductor ($L_h$) is zero.

3. Method according to claim 1 or 2, **characterised in that** the medium-frequency transformer (50) of the series resonant DC/DC converter (44) is short-circuited such that the resonant capacitor ($C_R$) is not disposed in the short-circuited electric circuit.

4. Method according to claim 1, **characterised in that** the two modulation pauses of a variable length of a switching period duration ($T_{SO}$) are calculated such that the medium-frequency transformer (50) is not saturated.

5. Method according to claim 1, **characterised in that** the inverter cutoff time ($T_v$) is divided into two equal parts which are arranged in relation to one another in terms of time such that the modulation pause of a variable length is arranged between them in terms of time.

6. Device for carrying out the method according to one of the afore-cited claims, wherein the primary-side and secondary-side self-commutated converter (46, 48) is embodied as a single-phase full-bridge circuit in each case and the device is adjusted such that the method is carried out during operation.

7. Device for carrying out the method according to one of claims 1 to 5, wherein the primary-side self-commutated converter (46) is embodied as a single-phase half-bridge circuit, the two capacitors (58, 60) which are connected electrically in series are connected electrically in parallel, wherein a bidirectional switch ($S_1$) connects a connecting point of these two capacitors (58, 60) with an AC voltage-side terminal of the single-phase half-bridge circuit in an electrically conducting manner and wherein the secondary-side self-commutated converter (48) is embodied as a single-phase full-bridge circuit and the device is adjusted such that the method is carried out during operation.

8. Device for carrying out the method according to one of claims 1 to 5, wherein the primary-side self-commutated converter (46) is embodied as a single-phase 3-point NPC half-bridge circuit and wherein the secondary-side self-commutated converter (48) is embodied as a single-phase full-bridge circuit and the device is adjusted such that the method is carried out during operation.

9. Device according to one of claims 6 to 8, **characterised in that** a resonant capacitor ($C_R$) is arranged upstream of an AC voltage-side terminal of the single-phase full-bridge circuit of the secondary-side self-commutated converter (48).

10. Device for carrying out the method according to one of claims 1 to 5, wherein the secondary-side self-commutated converter (48) is embodied as a single-phase full-bridge circuit and the primary-side self-commutated converter (46) is embodied as a single-phase half-bridge circuit, in which the resonant capacitor ($C_R$) is integrated, wherein the device is adjusted such that the method is carried out during operation.

11. Device according to claim 10 with a plurality of primary-side self-commutated converters (46), **characterised in that** on the primary side the medium-frequency transformer (50) has a primary winding (62) for each primary-side self-commutated converter (46) and on the secondary side has a secondary winding (56), wherein these windings (62, 56) are arranged on a core (64).

**Revendications**

1. Procédé de cadencement d'interrupteurs ( T1...T4, T1'... T4' ) de puissance à semi-conducteur pouvant être ouverts d'un convertisseur ( 46, 48 ) à commutation automatique du côté primaire et secondaire d'un convertisseur ( 44 ) courant continu/courant continu à résonance série d'un convertisseur d'alimentation à moyenne fréquence à plusieurs points d'un convertisseur de traction, dans lequel on connecte entre eux les deux convertisseurs ( 46, 48 ) à commutation automatique du côté de la tension alternative au moyen d'un transformateur ( 50 ) à fréquence moyenne, dans lequel un condensateur ( $C_R$ ) de résonance est monté en série avec l'inductance ( $L_\sigma$ ) de fuite du transformateur ( 50 ) à fréquence moyenne et dans lequel il est monté électriquement, en parallèle à chacun des deux convertisseurs ( 46, 48 ) à commutation automatique du côté de la tension en continu, un condensateur ( 52, 54 ) de circuit intermédiaire, comprenant les stades de procédé suivants :

a) cadencement synchrone et en même phase des interrupteurs ( T1...T4, T1'...T4') de puissance à semi-conducteur pouvant être ouverts des deux convertisseurs ( 46, 48 ) à commutation automatique du convertisseur ( 44 ) courant continu/courant continu à résonance série, de manière à appliquer à ses bornes, dans le circuit intermédiaire à courant alternatif, respectivement une tension ( $U_{d,p}$ $U_{d,s}$ ) positive,
b) blocage des interrupteurs ( T1...T4, T1'...T4' ) de puissance à semi-conducteur pouvant être ouverts des deux convertisseurs ( 46, 48 ) à commutation automatique pour un temps $T_v$ de blocage d'onduleur déterminé à l'avance,
c) cadencement synchrone et en même phase des interrupteurs ( T1...T4, T1'...T4' ) de puissance à semi-conducteur pouvant être ouverts des deux convertisseurs ( 46, 48 ) à commutation automatique du convertisseur ( 44 ) à courant continu/courant continu à résonance série, de manière à appliquer à ses bornes, dans le circuit intermédiaire à courant alternatif, respectivement une tension ( $U_{d,p}$ $U_{d,s}$ ) négative,
d) blocage des interrupteurs ( T1...T4, T1'...T4' ) de puissance à semi-conducteur pouvant être ouverts des deux convertisseurs ( 46, 48 ) à commutation automatique pendant un temps ( $T_v$ ) de blocage d'onduleur déterminé à l'avance,

**caractérisé en ce que** respectivement, après les stades a) et c) du procédé, pendant un intervalle de cadencement de longueur variable, on commande des interrupteurs ( T1...T4, T1'...T4' ) à semi-conducteur de puissance pouvant être ouverts du convertisseur ( 46, 48 ) à commutation automatique du côté primaire ou secondaire du convertisseur ( 44 ) à courant continu/courant continu à résonance série, de manière à court-circuiter du côté primaire ou secondaire le transformateur ( 50 ) à fréquence moyenne du convertisseur ( 44 ) à courant continu/courant continu à résonance série, les interrupteurs ( T1...T4, T1'...T4' ) de puissance à semi-conducteur pouvant être ouverts du convertisseur ( 46, 48 ) à commutation automatique du côté secondaire ou primaire du convertisseur ( 44 ) à courant continu/courant continu à résonance série étant bloqués.

2. Procédé de cadencement, **caractérisé en ce que** l'on choisit les deux intervalles de cadencement de longueur variable pendant une période ( $T_{SO}$ ) de commutation, de manière à ce que la tension ( $U_{Lh}$ ) moyenne à l'inductance ( $L_h$ ) principale soit nulle.

3. Procédé de cadencement suivant la revendication 1 ou 2, **caractérisé en ce que** l'on court-circuite le transformateur ( 50 ) à fréquence moyenne du convertisseur ( 44 ) à courant continu/courant continu à résonance série, de manière à ce que le condensateur ( $C_R$ ) de résonance ne se trouve pas dans le circuit court-circuité.

4. Procédé de cadencement suivant la revendication 1, **caractérisé en ce que** les deux intervalles de cadencement de longueur variable d'une période ( $T_{SO}$ ) de commutation sont telles que le transformateur ( 50 ) à fréquence variable ne passe pas en saturation.

5. Procédé de cadencement suivant la revendication 1, **caractérisé en ce que** le temps ( $T_v$ ) de blocage d'onduleur est subdivisé en deux parties égales et qui sont disposées dans le temps l'une par rapport à l'autre de manière à avoir entre elles dans le temps l'intervalle de cadencement de longueur variable.

6. Dispositif pour effectuer le procédé suivant l'une des revendications précédentes, dans lequel le convertisseur ( 46, 48 ) à commutation automatique du côté primaire et secondaire est constitué respectivement comme un circuit monophasé à pont complet et le dispositif est adapté, de manière à effectuer en fonctionnement le procédé.

7. Dispositif pour effectuer le procédé suivant l'une des revendications 1 à 5, dans lequel le convertisseur ( 46 ) à commutation automatique du côté primaire est constitué sous la forme d'un circuit monophasé en demi-pont auxquels sont montés en parallèle électriquement deux condensateurs ( 58, 60 ) montés électriquement en série, dans lequel un interrupteur ( S1 ) bidirectionnel relie d'une manière conductrice de l'électricité un point de liaison de ces deux condensateurs ( 58, 60 ) à une borne du côté de la tension alternative du circuit monophasé en demi-pont et dans lequel le convertisseur ( 48 ) à commutation automatique du côté secondaire est constitué sous la forme d'un circuit monophasé à pont complet et le dispositif est adapté de manière à effectuer en fonctionnement le procédé.

8. Dispositif pour effectuer le procédé suivant l'une des revendications 1 à 5, dans lequel le convertisseur ( 46 ) à commutation automatique du côté primaire est constitué sous la forme d'un circuit monophasé en demi-pont NPC à trois points et dans lequel le convertisseur ( 48 ) à commutation automatique du côté secondaire est constitué sous la forme d'un circuit monophasé à pont complet et le dispositif est adapté de manière à effectuer en fonctionnement le procédé.

9. Dispositif pour effectuer le procédé suivant l'une des revendications 6 à 8, **caractérisé en ce qu'**un condensateur ( $C_R$ ) de résonance est monté en amont d'une borne du côté de la tension alternative du circuit monophasé à pont complet du convertisseur ( 48 ) à commutation automatique du côté secondaire.

10. Dispositif pour effectuer le procédé suivant l'une des revendications 1 à 5, dans lequel le convertisseur ( 48 ) à commutation automatique du côté secondaire est constitué sous la forme d'un circuit monophasé à pont complet et le convertisseur ( 46 ) à commutation automatique du côté primaire est constitué sous la forme d'un circuit monophasé à demi-ponts auquel le condensateur ( $C_R$ ) de résonance est intégré, dans lequel le dispositif est adapté de manière à effectuer en fonctionnement le procédé.

**11.** Dispositif suivant la revendication 10, comprenant une pluralité de convertisseurs ( 46 ) à commutation automatique du côté primaire, **caractérisé en ce que** le transformateur ( 50 ) à fréquence moyenne a un enroulement ( 62 ) primaire du côté primaire pour chaque convertisseur ( 46 ) à commutation automatique du côté primaire et a un enroulement ( 56 ) secondaire du côté secondaire, ces enroulements ( 62, 56 ) étant disposés sur un noyau ( 64 ).

FIG 1

~15kV, 16.7 Hz    ~25kV, 50 Hz

EP 2 786 477 B1

FIG 2

FIG 3

FIG 4

$T_1$, $T'_1$

$T_2$, $T'_2$

$T_3$, $T'_3$

$T_4$, $T'_4$

$t$

$t$

$t$

$t$

FIG 5

$u_p$
$u_s$

$\Delta U_d$

$t$

FIG 6

$\Delta u$

$\Delta U_d$

$t$

FIG 7

$i$

$\dfrac{T_{res}}{2}$

$T_v$

$T_{S0}$

$t$

EP 2 786 477 B1

FIG 8

FIG 9

18

FIG 10

FIG 11

FIG 12

FIG 13

FIG 14

FIG 15

FIG 16

FIG 17

FIG 18

FIG 19

FIG 20

FIG 21

FIG 22

FIG 23

$u_{T'2}$   $u_{T'1}$

$U_{d, s}$

t

$u_{T'4}$   $u_{T'3}$

$U_{d, s}$

t

FIG 24

$u_{Lh}$   $i_m$

$t_0$

t

$T_v$

$T_S$

FIG 25

FIG 26

EP 2 786 477 B1

FIG 27

FIG 28

FIG 29

EP 2 786 477 B1

FIG 30

$i_S$

t

FIG 31

$u_{T'2}$

$u_{T'1}$

$U_{d,\,s}$

t

$u_{T'4}$

$u_{T'3}$

$U_{d,\,s}$

t

FIG 32

$u_{Lh}$

$i_m$

t

$\dfrac{T_p}{2}$

$T_v$

FIG 33

$i_S$

t

FIG 34

$u_{T'2}$   $u_{T'1}$

$U_{d,\,s}$

t

$u_{T'4}$   $u_{T'3}$

$U_{d,\,s}$

t

FIG 35

$u_{Lh}$   $i_m$

t

$T_V$

FIG 36

FIG 37

FIG 38

**FIG 39**

**FIG 40**

## FIG 41

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1226994 A2

- US 4953068 A

**In der Beschreibung aufgeführte Nicht-Patentliteratur**

- **MICHAEL STEINER ; HARRY REINOLD.** Medium Frequency Topology in Railway Applications. *Konferenzband der European Conference on Power Electronics and Applications,* 2007
- **JAN WEIGEL ; ANDREAS NAGEL ; HOLGER HOFFMANN.** High Voltage IGBTs in Medium Frequency Traction Power Supply. *13th European Conference on Power Electronics and applications, 2009: EPE'09,* 08. September 2009

- 1 Megawatt, 20 kHz, Isolated, Bidirectional 12kV to 1.2kV DC-DC Converter for Renewable Energy Applications. **G. ORITZ ; J. BIELA ; D. BORTIS ; J. W. KOLAR.** 2010 International Power Electronics Conference: IPEC-SAPPORO 2010; Sapporo. IEEE, 21. Juni 2010
- **VON B.ENGEL ; M. VIKTOR ; G. BACHMANN ; A. FALK.** 15kV/16,7Hz Energy Supply System with Medium Frequency Transformer and 6.5kV IGBTs in Resonant Operation. *Konferenzband der EPE-Konferenz,* 2003